(19) Europäisches Patentamt

European Patent Office

Office européen des brevets

(11) **EP 4 275 301 B1**

(12) **EUROPEAN PATENT SPECIFICATION**

(45) Date of publication and mention
of the grant of the patent:
**24.07.2024 Bulletin 2024/30**

(21) Application number: **22773197.3**

(22) Date of filing: **02.09.2022**

(51) International Patent Classification (IPC):
***H04B 7/185*** *(2006.01)*

(52) Cooperative Patent Classification (CPC):
**H04B 7/18506**

(86) International application number:
**PCT/EP2022/074515**

(87) International publication number:
**WO 2023/031432 (09.03.2023 Gazette 2023/10)**

(54) **AIRCRAFT COLLISION AVOIDANCE METHOD AND DEVICE**

VERFAHREN UND VORRICHTUNG ZUR VERMEIDUNG VON FLUGZEUGKOLLISIONEN

PROCÉDÉ ET DISPOSITIF D'ÉVITEMENT DE COLLISION D'AÉRONEF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2021 PCT/EP2021/074358**

(43) Date of publication of application:
**15.11.2023 Bulletin 2023/46**

(73) Proprietor: **Flarm Technology AG
6300 Zug (CH)**

(72) Inventors:
• **MÄDER, Urban
8925 Ebertswil (CH)**
• **ROCKENBAUER, Friedrich, Martin
4810 Gmunden (AT)**
• **KAUFMANN, Thomas
8908 Hedingen (CH)**

(74) Representative: **E. Blum & Co. AG
Franklinturm
Hofwiesenstrasse 349
8050 Zürich (CH)**

(56) References cited:
**GB-A- 2 367 965        US-A1- 2013 036 238
US-A1- 2021 035 454      US-A1- 2021 263 127**

• **VARGA MIHALY ET AL: "ADS-B based real-time
air traffic monitoring system", 2015 38TH
INTERNATIONAL CONFERENCE ON
TELECOMMUNICATIONS AND SIGNAL
PROCESSING (TSP), IEEE, 9 July 2015
(2015-07-09), pages 215 - 219, XP032792287, DOI:
10.1109/TSP.2015.7296255**

**Description**

Technical Field

The invention relates to a device, method, and system for wirelessly broadcasting information pertaining to an aircraft for traffic awareness and collision avoidance.

Background Art

Every year, a substantial number of VFR (visual flight rules) aircraft are involved in mid-air collisions. Unfortunately, half of these incidents are fatal. Surprisingly, most of these accidents happen in good visibility and during daylight conditions.

Accident investigations have shown that the VFR-principle of "see and avoid" is insufficient, as it is often nearly impossible to see the other aircraft. The human visual system is not well suited for objects on a collision course, because these are on a fixed vector from the aircraft, i.e. the image of a foreign aircraft does not "move" on the pilot's retina. Other biological, physiological, and psychological effects ("human factors") as well as limited cockpit visibility in a typical General Aviation aircraft further decrease the chance of seeing the other aircraft early enough to avoid a mid-air collision.

Traditional FLARM as well as newer PowerFLARM devices (see, e.g. https://flarm.com/wp-content/uploads/man/FLARM-General-EN.pdf as accessed on 2021-02-05) work by calculating and broadcasting their own future flight paths to nearby aircraft together with a unique identifier. At the same time, they receive the future flight paths from surrounding aircraft. All these values are stored in broadcasted data packets. Then, an intelligent motion prediction algorithm calculates a collision risk for each aircraft. When a collision probability exceeds a threshold, the pilots are alerted with the relative position of the other aircraft, enabling them to avoid the collision.

Besides issuing collision warnings, FLARM devices can also show nearby aircraft on an overview screen showing surrounding airspace. This helps pilots to detect the other aircraft and perform an evasive maneuver before a collision warning becomes necessary.

VARGA MIHALY et al.: "ADS-B based real-time air traffic monitoring system", 38th International Conference on Telecommunications and Signal Processing (TSP), IEEE, 9 July 2015, pages 215-219 discloses an implementation of an Automatic Dependent Surveillance-Broadcast (ADS-B) based real time air traffic monitoring and tracking system.

US 2021/0035454 A1 discloses a remote identification device and method for unmanned aircrafts.

US 2013/0036238 A1 discloses methods and systems for compressing location data of a mobile radio for over-the-air transmission to a stationary receiver.

However, the amount of broadcasted information is restricted with these prior art devices.

Disclosure of the Invention

The problem to be solved by the present invention is therefore to at least in part overcome these shortcomings of prior art solutions.

This problem is solved by the devices and methods of the independent claims.

Accordingly, a broadcast device for wirelessly broadcasting information pertaining to a first aircraft comprises a positioning device (e.g. a GNSS receiver such as a GPS receiver, a GLONASS receiver, and/or a Galileo receiver) configured to determine position data PD1 which is indicative of a position P1 of the broadcast device or - if the broadcast device is mounted to, affixed at, or situated in or at the aircraft or a pilot onboard the aircraft - of the aircraft. The position data PD1 advantageously comprises latitude data PD1_LAT indicative of a latitude, longitude data PD1_LON indicative of a longitude and advantageously altitude data PD1_ALT indicative of an altitude of the broadcast device. The position data PD1 can optionally at least in part be determined and/or enhanced from on-board navigational systems of the aircraft such as a barometric pressure sensor, a magnetic sensor, an acceleration sensor, an inertial navigation system, etc., e.g. to increase the altitude precision which can be rather poor for typical GNSS devices without correction. In such a case, the combined GNSS receiver together with the additional sensor/system as well as any data fusion logics involved qualifies as "positioning device" according to the invention.

The broadcast device further comprises a control unit (such as a microcontroller with a memory) which is configured to receive the position data PD1 from the positioning device, preferably via an internal bus such as a serial or an I2C bus, and advantageously store it in the memory (typically as short-term storage in a volatile memory such as RAM). Thus, the control unit can further process the position data PD1, e.g. use it for determining truncated position data PD1' which is later added to a to-be-broadcasted data packet (see below).

The position data PD1 and/or the truncated position data PD1' and/or the pair c1 is advantageously encoded as an integral data type (e.g. with a value 5312) indicative of a multiple of a specific fraction of a degree (e.g. 1E-7°), e.g., received from the positioning device (e.g. 5312 * 1E-7°). Thus, computation is simplified.

In addition, the control unit is configured to (advantageously repeatedly for each data packet, see below) determine the truncated position data PD1' (i.e. position data with discarded information compared to the original untruncated position data) using at least a part of the received position data PD1. A bit width S 1' of the truncated position data PD1' is thereby smaller than a bit width S1 of the position data PD1. As an example, the truncated position data PD 1' has a bit width (size) of 20 bits for latitude and longitude each (e.g. after a reduction of resolution and range, see below) while the original untruncated position data PD1 has a bit width (size) of 32 bits for each dimension. Thus, bandwidth usage can be reduced when the truncated position data PD1' is later broadcasted (see below). This enables the broadcasting of more information and/or at a higher update rate.

According to the invention, the control unit is further configured to generate the data packet D1 based on the truncated position data PD1' and based on an identifier ID1 of the broadcast device. The term "based on" is to be understood in such a way that the mentioned information or values indicative thereof are comprised in the data packet D1.

Note that further information can optionally be determined by the positioning device and/ or generated by the control unit, e.g. ground speed, course/track, climb rate, acceleration, turn rate, movement mode, horizontal position accuracy, vertical position accuracy, velocity accuracy, a future flight trajectory, e.g. as computed from the current position P1 and velocity and/ or acceleration and/ or wind vectors, etc. This further information or values indicative thereof can then be added to the data packet D1 in truncated or untruncated form which improves the calculation of collision probabilities and/or situational awareness.

According to the invention, the broadcast device further comprises a radio transmitter which is configured to receive the generated data packet D1 from the control unit, e.g. via an internal bus such as an I2C or a serial bus. The data packet D1 is indicative of the to-be-broadcasted information pertaining to the first aircraft (at least when the broadcast device is mounted to, affixed at, or situated in or at the aircraft or a pilot onboard the aircraft) and it is wirelessly broadcasted by the radio transmitter, e.g. to ground based receiver stations and/ or to adjacent aircraft. Thus, a receiver of the data packet D1 can reconstruct the position P1 and - using these values - e.g. calculate a collision probability and - based thereon - putatively issue a warning to the pilot. This enhances the safety of the aircraft(s) and/or overall situational awareness.

According to the invention, the broadcast device is further configured to generate the data packet D1 in such a way that it comprises a pair $c1 = (e1, m1)$ with an exponent $e1$ being a natural number and with a mantissa $m1$ being a natural number. This pair or code point $c1$ is indicative of a value $v1$ (e.g. including a rounding of the value $v1$), which can be a floating point or a natural number. The mantissa $m1$ has a bit width of $N_{m1}$ (e.g. 7) and the exponent $e1$ has a bit width of $N_{e1}$ (e.g. 2). Then, $v1 = 2^{e1} * (2^{Nm1} + m1) - 2^{Nm1}$. According to the invention, the bit widths $N_{m1}$ and $N_{e1}$ are selected such that a total bit width $N1 = N_{e1} + N_{m1}$ of the pair $c1$ is smaller than a total bit width of the value $v1$. A linear scaling factor A1 representing the physical unit/ resolution for the encoded numerical value $v1$ can also be used, see chapter 2.1 for the AMP protocol description below for details. Thus, bandwidth is saved while a wide range of values $v1$ can be encoded.

Advantageously, the broadcast device is configured to generate the data packet D1 in such a way that the pair $c1$ is indicative of velocity data VD1 of the first aircraft. In particular the value $v1$ is indicative of a velocity vector magnitude of the first aircraft (i.e. an absolute value of the aircraft's velocity). Thus, bandwidth is saved while a wide range of velocity vector magnitudes (e.g., ranging from a hobbyist UAV to a military jetplane) can be encoded.

In an advantageous embodiment, the broadcast device is configured to determine the truncated position data PD1' using

- the latitude data PD1_LAT such that the truncated position data PD1' comprises truncated latitude data PD1'_LAT and/or
- the longitude data PD1_LON such that the truncated position data PD1' comprises truncated longitude data PD1'_LON.

Both the truncated latitude data PD1' _LAT and the truncated longitude data PD1'_LON are smaller in their bit widths than their original untruncated counterparts PD1_LAT and PD1_LON, respectively. Thus, size reduction can be performed independently from each other for the latitude data and the longitude data.

In particular, the broadcast device is configured to determine the truncated position data PD1' such that the truncated position data comprises the altitude data PD1_ALT or a value indicative thereof (e.g. with an offset), advantageously in an untruncated form.

In another advantageous embodiment, the broadcast device is configured to, for determining the truncated position data PD1', reduce a resolution (i.e. the smallest encodable values/ value differences become coarser) of at least a part of the original untruncated position data PD1, in particular of the latitude data PD1_LAT and/or of the longitude data PD1_LON. This helps to save bandwidth. The resolution reduction is advantageously performed by truncating, e.g. the original latitude data PD1_LAT and/or the original longitude data PD1_LON in a binary representation by a first number of trailing bits (i.e. least significant bits). As an example, the original untruncated latitude/longitude data is each stored as a signed 32-bit integer, from which 6 trailing bits are truncated each, thereby effectively reducing the resolution. Thus, a computationally efficient resolution reduction is achieved.

Then, advantageously, the broadcast device is configured to, prior to or together with reducing the resolution as described above, round the original untruncated latitude/longitude data. As an example, the value of the most significant to-be-truncated bit (i.e. 1/2 of the value of the least significant not-to-be-truncated bit) can be added to the original value before truncation. Thus, it is ensured that a proper mapping results between untruncated and truncated position data.

In another advantageous embodiment, the broadcast device is configured to, for determining the truncated position data PD1', reduce an encodable value range for at least a part of the original untruncated position data PD1, in particular for the latitude data PD1_LAT and/or for the longitude data PD1_LON. Thus, the truncated latitude data PD1'_LAT and the truncated longitude data PD1'_LON are obtained. This helps to save bandwidth. The encodable value range reduction is advantageously performed by truncating, e.g. the original latitude data PD1_LAT and/or the original longitude data PD1_LON in a binary representation by a second number of leading bits (i.e. most significant bits). Due to how signed numbers are represented (two's complement), this approach works independently of the sign. As an example, the original untruncated latitude/longitude data is each stored as a signed 32-bit integer, from which 6 leading bits are truncated each, thereby effectively reducing the range of encodable values (disregarding the scaling factor) from $-2,147,483,648...2,147,483,647$ $(2^{31}-1)$ to $0...67,108,863$ $(2^{26}-1)$ for unsigned truncated latitude/longitude data. Thus, a computationally efficient range reduction is achieved.

It can be imagined that the described reduction in range corresponds to relating the truncated position data PD1', in particular the truncated latitude data PD1'_LAT and/or the truncated longitude data PD1'_LON to an origin of a local grid cell around the sender/receiver and transmitting only a relative position to the origin of said grid cell. As an illustrative example (disregarding the 1E-7° scaling), the untruncated position 47.37647448696338 N, 8.559292331307462 E (https://w3w.co/spiele.bemerkte.handlung) could be broadcasted as 37647448696338 N, 559292331307462 E, thus truncating or neglecting the integral parts of the coordinates above (47° N/ 8° E) and only broadcasting the fractional part. Such an approach introduces ambiguity, however, because the position could be in the city of Zurich (for the true 47° N/ 8° E), in Altstätten SG (for 47° N/ 9° E), in Schwetzingen near Heidelberg (for 49° N/ 8° E), and so on. However, when a receiver knows that the sender must be located close to the city of Zurich (e.g. because it cannot receive radio signals from Altstätten SG, from Schwetzingen, etc.), this ambiguity can later be resolved. The size of such imaginary grid cells is therefore advantageously set to be larger than the maximum possible radio range of the broadcast device. Then, during later position reconstruction, e.g. the original latitude data PD1_LAT and/or the original longitude data PD1_LON can be unambiguously reconstructed by using the principle of locality (see below).

Then, the broadcast device is advantageously configured to set the encodable value range such that a maximum encodable longitudinal separation (i.e. a longitudinal extent of the grid cell represented in km) and a maximum encodable latitudinal separation (i.e. a latitudinal extent of the grid cell represented in km) are both larger than a radio range of the (radio transmitter of the) broadcast device, in particular by a factor of 2 or more. These "longitudinal extents" and "latitudinal extents" of the grid cells can be set by selecting the number of leading bits to be truncated as explained above. By setting these encodable value ranges as explained, the introduced ambiguity can be later removed due to the fact that the radio signals must necessarily be local and that the receiving broadcast device knows its own unambiguous position by means of its own positioning device.

Advantageously, then, the broadcast device is configured to set the encodable longitudinal separation depending on the latitude data PD1_LAT of the position data PD1. In particular, with an increasing abs(PD1_LAT), a decreasing number of leading bits is truncated from PD1_LON. Thus, it can be ensured that the "longitudinal extents" of the grid cells always stay above the radio range of the radio transmitter, even when the broadcast device approaches the North or South Pole.

Advantageously, both operations (i.e. trailing bit truncation for resolution reduction and leading bit truncation for value-range reduction) are performed at the same time. Thus, even more bandwidth is saved. Then, it is advantageous that a constant total number of bits is truncated, but the block of untruncated bits contributing to the truncated longitude data PD1'_LON is gradually shifted to the left as the latitude data PD1_LAT increases, i.e. as the broadcast device approaches the poles. In other words, the longitude grid parameters are adapted to the meridians as they converge towards the poles, i.e. with increasing latitude.

In another preferred embodiment of the invention, the broadcast device further comprises a radio receiver (or a combined radio transceiver for broadcasting and receiving data packets) which is configured to receive a foreign data packet D2 as broadcasted from a foreign broadcast device. The foreign data packet D2 is, similarly to the first data packet D1 as discussed above, indicative of information pertaining to a second aircraft, at least when mounted to, affixed at, or situated in or at the second aircraft or a pilot onboard the second aircraft. Specifically, the foreign data packet D2 comprises foreign truncated position data PD2', in particular foreign truncated latitude data PD2'_LAT and/or foreign truncated longitude data PD2'_LON. Furthermore, the foreign data packet D2 comprises a pair $c2 = (e2, m2)$ with an exponent e2 being a natural number and with a mantissa m2 being a natural number,

wherein the pair c2 is indicative of a value v2,
wherein the mantissa m2 has a bit width of $N_{m2}$ and wherein the exponent e2 has a bit width of $N_{e2}$,
wherein

$$v2 = 2^{e2} * (2^{Nm2} + m2) - 2^{Nm2}$$

and wherein the bit widths $N_{m2}$ and $N_{e2}$ are selected such that a total bit width $N2 = N_{e2} + N_{m2}$ of the pair c2 is smaller than a total bit width of the value v2. A linear scaling factor A2 representing the physical unit/ resolution for the encoded numerical value v2 can also be used, see chapter 2.1 for the AMP protocol description below for details.

Then, the broadcast device is configured to compute (decode) the value v2 using the pair c2 as received in the data packet D2. Thus, bandwidth is saved while a wide range of values v2 can be transferred.

Furthermore, advantageously, the broadcast device is configured to calculate a collision probability between the first aircraft and the second aircraft and/or provide information improving situational awareness, e.g. by taking the aircraft positions as comprised in the first and second data packets into account. In general, the situation is assessed based on the information pertaining to the first aircraft which is available to the broadcast device (own information) and based on the received information pertaining to the second aircraft (foreign information). Preferably, a collision warning is then issued to the pilot when the collision probability exceeds a certain threshold which helps to decreases the risk of a mid-air collision.

For this, advantageously, the broadcast device is configured to disambiguate the foreign truncated position data PD2', in particular the foreign truncated latitude data PD2'_LAT and/or the foreign truncated longitude data PD2'_LON. This is achieved using its own position data PD1, in particular using its own latitude data PD1_LAT and its own longitude data PD1_LON. The term "disambiguate" relates to a removal of the ambiguities introduced by the "grid celling of the coordinate space", i.e. the encodable value range reduction as discussed above. Specifically, the receiving broadcast device determines the original foreign position data PD2 without reduced value ranges (but with reduced resolution and rounding, if any) taking into account its own untruncated position. In the example above, the broadcast device would know that it can only receive data packets from the region around the city of Zurich and add 47° N/ 8° E to the received foreign truncated position data PD2' taking into account the fact that both broadcast devices must be located in or near the city of Zurich due to radio range considerations. The foreign position candidate that results in the lowest distance between the sending and the receiving broadcast devices is considered to be correct. Thus, ambiguities in the foreign truncated position data PD2' are resolved.

In addition, the signal strength (e.g. RSSI) and/or directional characteristics (e.g. from a receiver antenna array) of the received foreign data packet D2 can be taken into account for disambiguation.

Advantageously, the pair c2 as comprised in the foreign data packet D2 is indicative of foreign velocity data VD2 of the second aircraft. In particular the value v2 is indicative of a velocity vector magnitude of the second aircraft (i.e. an absolute value of the aircraft's velocity). Then, the broadcast device is configured to compute (decode) the foreign velocity data VD2 using the received pair c2, in particular to compute the velocity vector magnitude v2 using the pair c2. Thus, bandwidth is saved while a wide range of values v2 (e.g., velocity vector magnitudes ranging from a hobbyist UAV to a military jetplane) can be transferred.

Preferably, the broadcast device is configured to generate the data packet D1 in such a way that it comprises a header section and a payload section. In particular the header section is non-encrypted and/or the payload section is encrypted, e.g. by means of a symmetric or an asymmetric (e.g. public/private key) cryptographic algorithm. Thus, parts of the data packet D1 can be received and read by anyone while other parts of the packet can only be read by authorized receivers. This enhances security.

Then, advantageously, the payload section of the data packet D1 is encrypted by means of a symmetric cryptographic algorithm (e.g. AES with a key size of, e.g. 128 bits) and, in particular, the broadcast device is configured to use a cryptographic nonce based on the header section of the data packet D1, based on a time stamp, and based on a secret constant for encrypting the payload section of the data packet D1. Thus, security is further enhanced, because, e.g. the cryptographic nonce contains the changing time stamp and the variable data packet header which renders replay attacks not feasible.

In yet another preferred embodiment, the broadcast device is configured to generate the data packet D1 in such a way that it comprises at least one of

- a timestamp, in particular in the (e.g. encrypted) payload section of the data packet,
- a packet protocol version, in particular in the (e.g. non-encrypted) header section of the data packet, and
- a maximum supported packet protocol version, in particular in the (e.g. non-encrypted) header section of the data packet.

This makes it possible to implement additional features, e.g. for enhancing protocol compatibility between different devices with putatively varying computational resources.

In an advantageous embodiment of the invention, the broadcast device is configured to,

- repeatedly determine updated position data PD1 indicative of an updated position P1 of the broadcast device by means of the positioning device, in particular comprising updated longitude data PD1_LON and/or updated latitude data PD1_LAT,
- repeatedly determine updated truncated position data PD1' using at least a part of the updated position data PD 1, in particular the updated longitude data PD1_LON such that the updated truncated position data PD 1' comprises updated truncated longitude data PD 1'_LON and/or updated latitude data PD 1_LAT such that the updated truncated position data PD1' comprises updated truncated latitude data PD1'_LAT, and
- repeatedly generate and broadcast an updated data packet D 1 based on the updated truncated position data PD1', in particular the updated truncated longitude data PD1'_LON and/or the updated truncated latitude data PD 1' _LAT, and based on the identifier ID1 of the broadcast device.

In particular, any time interval between two of such consecutive updates (i.e. determining the updated position data PD1, truncating at least a part of it to determine the updated truncated position data PD1', and generating and broadcasting the updated data packet D1) is between 0.1 s and 5 s, in particular is between 0.5 s and 1 s, and in particular is 1 s.

Advantageously, the broadcast device is configured to, at a predefined interval of, e.g. 30 s,

- repeatedly determine updated position data PD1 indicative of an updated position P1 of the broadcast device by means of the positioning device, in particular comprising updated longitude data PD1_LON and/or updated latitude data PD1_LAT,
- repeatedly generate and broadcast an updated data packet D 1 based on the updated position data PD 1, in particular the updated longitude data PD1_LON and/or the updated latitude data PD1_LAT, and based on the identifier ID1 of the broadcast device.

This way, intermingled in the truncated position data packets as described above, untruncated position data can be broadcasted with a rather slow update rate, which helps, e.g. stationary receiving broadcast devices with putatively larger radio ranges to initialize a tracking mechanism which helps to disambiguate signals that are received from a distance exceeding the grid size.

As another aspect of the invention, a receiver device comprises:

- a radio receiver configured to receive a foreign data packet D2 as broadcasted from a foreign broadcast device, in particular as discussed above with regard to the first aspect of the invention, wherein the foreign data packet D2 is indicative of information pertaining to a second aircraft.

The foreign data packet D2 comprises foreign truncated position data PD2', in particular foreign truncated latitude data PD2'_LAT and foreign truncated longitude data PD2'_LON. A bit width S2' of the foreign truncated position data PD2' is smaller than a bit width S2 of foreign position data PD2 being indicative of an untruncated position P2 of the foreign broadcast device.

Further, the foreign data packet D2 comprises a pair c2 = (e2, m2) with an exponent e2 being a natural number and with a mantissa m2 being a natural number,

wherein the pair c2 is indicative of a value v2,
wherein the mantissa m2 has a bit width of $N_{m2}$ and wherein the exponent e2 has a bit width of $N_{e2}$,
wherein

$$v2 = 2^{e2} * (2^{Nm2} + m2) - 2^{Nm2}$$

and wherein the bit widths $N_{m2}$ and $N_{e2}$ are selected such that a total bit width $N2 = N_{e2} + N_{m2}$ of the pair c2 is smaller than a total bit width of the value v2. A linear scaling factor A2 representing the physical unit/ resolution for the encoded numerical value v2 can also be used, see chapter 2.1 for the AMP protocol description below for details.

The receiver device further comprises

- a control unit which is configured to:

  * receive position data PD1 indicative of a position P1 of the receiver device. This position P1 can be fixed, e.g. for a stationary receiver station on the ground or it can be variable, e.g. for a receiving only device mounted in a car or a "receiving only" aircraft. In the first case, the position P1 can e.g. be hardcoded in firmware and read out/received by the control unit, in the second case, the position P1 can be determined by a positioning device such as a GNSS receiver of the receiver device and received by the control unit, similarly to the case discussed above with regard to the combined transmitting and receiving broadcast device.

Further, the control unit is configured to:

  * receive the foreign data packet D2 as received by the radio receiver,
  * disambiguate the foreign truncated position data PD2', in particular the foreign truncated latitude data PD2' _LAT and the foreign truncated longitude data PD2'_LON using its own position data PD1, and
  * compute (decode) the value v2 using the pair c2 as received in the data packet D2. Thus, bandwidth is saved while a wide range of values v2 can be transferred.

Please note in this regard that all the technical effects and advantages as described above with the regard to the transmitting broadcast device similarly apply here for the receiving only device and are not repeated for reasons of clarity, as the devices complement each other and rely on the same inventive concept.

As yet another aspect of the invention, a method for, by means of a broadcast device, in particular as discussed above with regard to the first aspect of the invention, wirelessly broadcasting information pertaining to a first aircraft comprises steps of:

- providing the broadcast device comprising a positioning device, a control unit, and a radio transmitter, advantageously mounted or mountable to, affixed or affixable at, or situated or situatable in or at the first aircraft or a pilot onboard the first aircraft, and
- by means of the positioning device (e.g. a GNSS receiver such as a GPS receiver, a GLONASS receiver, a Galileo receiver and/or a combined positioning device taking into account information from onboard navigational systems, see above) determining position data PD1 indicative of a position P1 of the broadcast device. The position data PD1 comprises latitude data PD1_LAT indicative of a latitude of the broadcast device and longitude data PD1_LON indicative of a longitude of the positioning device. Altitude data PD1_ALT is advantageously also comprised.

The method comprises a further step of, by means of the control unit, receiving the position data PD1 as determined by the positioning device, preferably via an internal bus such as a serial or an I2C bus. Then, the position data is advantageously stored in the memory (typically as short-term storage in a volatile memory such as RAM). Subsequently, the control unit determines truncated position data PD1' (i.e. position data with discarded information compared to the original untruncated position data), in particular truncated latitude data PD1'_LAT using the original untruncated latitude data PD 1_LAT and truncated longitude data PD 1 _LON using the original untruncated longitude data PD1_LON. Thereby, a bit width S1' of the truncated position data PD1' is smaller than a bit width S 1 of the position data PD 1. As an example, the truncated position data PD1' has a bit width (size) of 20 bits for latitude and longitude each (e.g. after a reduction of resolution and range) while the original untruncated position data PD1 has a bit width (size) of 32 bits each. Thus, bandwidth usage can be reduced when the truncated position data PD1' is later broadcasted (see below). This enables the broadcasting of more information and/or at a higher update rate.

According to the invention, the method comprises a further step of

- generating a data packet D1 by means of the control unit based on the truncated position data PD1 and based on an identifier ID1 of the broadcast device. The term "based on" is to-be-understood in such a way that the mentioned information or values indicative thereof are comprised in the data packet D1.

Please note that further information can optionally be determined by the positioning device and/ or generated by the control unit, e.g. ground speed, course/track, climb rate, acceleration, turn rate, movement mode, horizontal position accuracy, vertical position accuracy, velocity accuracy, a future flight trajectory as computed from the current position P1 and velocity and/or acceleration and/ or wind vectors, etc. These further information or values indicative thereof can then be added to the data packet D1 in truncated or untruncated form which improves the calculation of collision probabilities and/or situational awareness.

According to the invention, the method comprises a further step of:

- by means of the radio transmitter receiving the generated data packet D1 (e.g. via an internal bus) and wirelessly broadcasting the received data packet D1, e.g. to ground based receiver stations and/or to adjacent aircraft. The broadcasted data packet D1 is indicative of the to-be-broadcasted information pertaining to the first aircraft. Thus, a receiver of the data packet D1 can reconstruct the position P1 and - using these values - e.g. calculate a collision probability and - based thereon - putatively issue a warning to the pilot. This enhances the safety of the aircraft(s) and/or overall situational awareness.

According to the invention, the method comprises a further step of generating the data packet D1 in such a way that it comprises a pair c1 = (e1, m1) with an exponent e1 being a natural number and with a mantissa m1 being a natural number. This pair or code point c1 is indicative of a value v1 (e.g. including a rounding of the value v1), which can be a floating point or a natural number. The mantissa m1 has a bit width of $N_{m1}$ (e.g. 7) and the exponent e1 has a bit width of $N_{e1}$ (e.g. 2). Then, $v1 = 2^{e1} * (2^{Nm1} + m1) - 2^{Nm1}$. According to the invention, the bit widths $N_{m1}$ and $N_{e1}$ are selected such that a total bit width $N1=N_{e1}+N_{m1}$ of the pair c1 is smaller than a total bit width of the value v1. A linear scaling factor A1 representing the physical unit/ resolution for the encoded numerical value v1 can also be used, see chapter 2.1 for the AMP protocol description below for details. Thus, bandwidth is saved while a wide range of values v1 can be encoded.

In another preferred embodiment of the invention, the broadcast device further comprises a radio receiver (or a combined radio transceiver for broadcasting and receiving data packets).

The method comprises a step of receiving, by means of the radio receiver, a foreign data packet D2 as broadcasted from a foreign broadcast device. The foreign data packet D2 is, similarly to the first data packet D1 as discussed above, indicative of information pertaining to a second aircraft, at least when mounted to, affixed at, or situated in or at the second aircraft or a pilot onboard the second aircraft. Specifically, the foreign data packet D2 comprises foreign truncated position data PD2', in particular with foreign truncated latitude data PD2'_LAT and/or foreign truncated longitude data PD2'_LON.

The method comprises a further step of

- disambiguating the foreign truncated position data PD2', in particular the foreign truncated latitude data PD2'_LAT and the foreign truncated longitude data PD2'_LON using its own position data PD1, in particular using its own latitude data PD1_LAT and its own longitude data PD1_LON. Thus, the receiving broadcast device can determine the untruncated (i.e. without reduced value range, not without reduced resolution) foreign position data PD2 that results in the lowest distance to the sending broadcast device. By the principle of locality, this must then be the true solution, since other solutions are not physically possible due to the radio range. Thus, ambiguities in the foreign truncated position data PD2' are resolved.

Furthermore, the foreign data packet D2 comprises a pair c2 = (e2, m2) with an exponent e2 being a natural number and with a mantissa m2 being a natural number,

wherein the pair c2 is indicative of a value v2,
wherein the mantissa m2 has a bit width of $N_{m2}$ and wherein the exponent e2 has a bit width of $N_{e2}$,
wherein

$$ v2 = 2^{e2} * (2^{Nm2} + m2) - 2^{Nm2} $$

and wherein the bit widths $N_{m2}$ and $N_{e2}$ are selected such that a total bit width $N2=N_{e2}+N_{m2}$ of the pair c2 is smaller than a total bit width of the value v2. A linear scaling factor A2 representing the physical unit/ resolution for the encoded numerical value v2 can also be used, see chapter 2.1 for the AMP protocol description below for details.

Then, the method comprises a further step of computing (decoding) the value v2 using the pair c2 as received in the data packet D2. Thus, bandwidth is saved while a wide range of values v2 can be transferred.

Furthermore, advantageously, the method comprises a step of

- calculating a collision probability between the first aircraft and the second aircraft and/or providing information improving situational awareness, e.g. by taking the aircraft positions as comprised in the first and second data packets into account. In general, the situation is assessed based on the information pertaining to the first aircraft which is available to the broadcast device (own information) and based on the received information pertaining to the second aircraft (foreign information). Preferably, a collision warning is then issued to the pilot when the collision probability exceeds a certain threshold which helps to decreases the risk of a mid-air collision.

As yet another aspect of the invention, a method for, by means of a receiver device, in particular as discussed above with regard to the second aspect of the invention, wirelessly receiving information pertaining to a second aircraft comprises steps of

- providing the receiver device comprising a control unit and a radio receiver,
- by means of the radio receiver receiving a foreign data packet D2 as broadcasted from a foreign broadcast device, in particular according to the first aspect of the invention, the foreign data packet D2 being indicative of the information pertaining to the second aircraft.

The foreign data packet D2 comprises foreign truncated position data PD2', in particular foreign truncated latitude data PD2'_LAT and foreign truncated longitude data PD2'_LON, wherein a bit width S2' of the foreign truncated position data PD2' is smaller than a bit width S2 of foreign position data PD2 being indicative of an untruncated position P2 of the foreign broadcast device.

Further, the foreign data packet D2 comprises a pair c2 = (e2, m2) with an exponent e2 being a natural number and with a mantissa m2 being a natural number,

wherein the pair c2 is indicative of a value v2,
wherein the mantissa m2 has a bit width of $N_{m2}$ and wherein the exponent e2 has a bit width of $N_{e2}$,
wherein

$$v2 = 2^{e2} * (2^{Nm2} + m2) - 2^{Nm2}$$

and wherein the bit widths $N_{m2}$ and $N_{e2}$ are selected such that a total bit width $N2=N_{e2}+N_{m2}$ of the pair c2 is smaller than a total bit width of the value v2. A linear scaling factor A2 representing the physical unit/ resolution for the encoded numerical value v2 can also be used, see chapter 2.1 for the AMP protocol description below for details.

The method comprises a further step of, by means of the control unit:

* receiving position data PD1 indicative of a position P1 of the receiver device. This position P1 can be fixed, e.g. for a stationary receiver station on the ground or it can be variable, e.g. for a receiving only device mounted in a car or a "receiving only" aircraft. In the first case, the position P1 can e.g. be hardcoded in firmware and read out/received by the control unit, in the second case, the position P1 can be determined by a positioning device such as a GNSS receiver of the receiver device and received by the control unit, similarly to the case discussed above with regard to the combined transmitting and receiving broadcast device.
* receiving the foreign data packet D2 as received by the radio receiver,
* disambiguating the foreign truncated position data PD2', in particular the foreign truncated latitude data PD2'_LAT and the foreign truncated longitude data PD2'_LON using its own position data PD1, and
* computing (decoding) the value v2 using the pair c2 as received in the data packet D2. Thus, bandwidth is saved while a wide range of values v2 can be transferred.

Please note in this regard that all the technical effects and advantages as described above with the regard to the transmitting method similarly apply here for the receiving only method and are not repeated for reasons of clarity, as the devices complement each other and rely on the same inventive concept.

As yet another aspect of the invention, a system for aircraft collision avoidance comprises

- a first broadcast device as discussed above with regard to the first aspect of the invention at a first aircraft (or pilot) for wirelessly broadcasting information pertaining to the first aircraft, and
- a second broadcast device as discussed above with regard to the first aspect of the invention at a second aircraft (or pilot) for wirelessly broadcasting information pertaining to the second aircraft.

Thus a collision probability between the first aircraft and the second aircraft is easier to derive, e.g. by taking the information pertaining to the first and second aircraft into account. Preferably, a collision warning is then issued to the pilot when the collision probability exceeds a certain threshold which helps to decreases the risk of a mid-air collision. This improves overall safety and/or situational awareness.

Brief Description of the Drawings

The invention will be better understood and objects other than those set forth above will become apparent when consideration is given to the following detailed description thereof. Such description makes reference to the annexed drawings, wherein:

Figs. 1a-1c show the principle of Extended Range Encoding (ERC),
Figs. 2-4 show the principle of Adaptive Coordinate Truncation (ACT),
Fig. 5 shows a broadcast device 10 according to an embodiment of the invention and a display unit 18, the broadcast device 10 comprising a positioning device 11, a control unit 12, and a radio transceiver 13, 14,
Fig. 6 shows a system for aircraft collision avoidance comprising a first broadcast device 10 at a first aircraft 1, a second broadcast device 20 at a second aircraft 2, a third broadcast device 30 at a paraglider pilot, and a ground based receiver station 40,
Fig. 7 shows a diagram visualizing determination of truncated position data PD1'_LAT and reconstruction of untruncated position data as used in the broadcast device 10/ receiver device 100 of Figs. 5, 6, 8 and 9,
Fig. 8 shows a broadcast device 10 according to an embodiment the invention and a display unit 18, the broadcast device 10 comprising a positioning device 11, a control unit 12, and a radio transceiver 13, 14, and
Fig. 9 shows a receiver device 100 according to an embodiment of the invention and a display unit 18, the receiver device 100 comprising a positioning device 11, a control unit 12, and a radio receiver 14.

Modes for Carrying Out the Invention

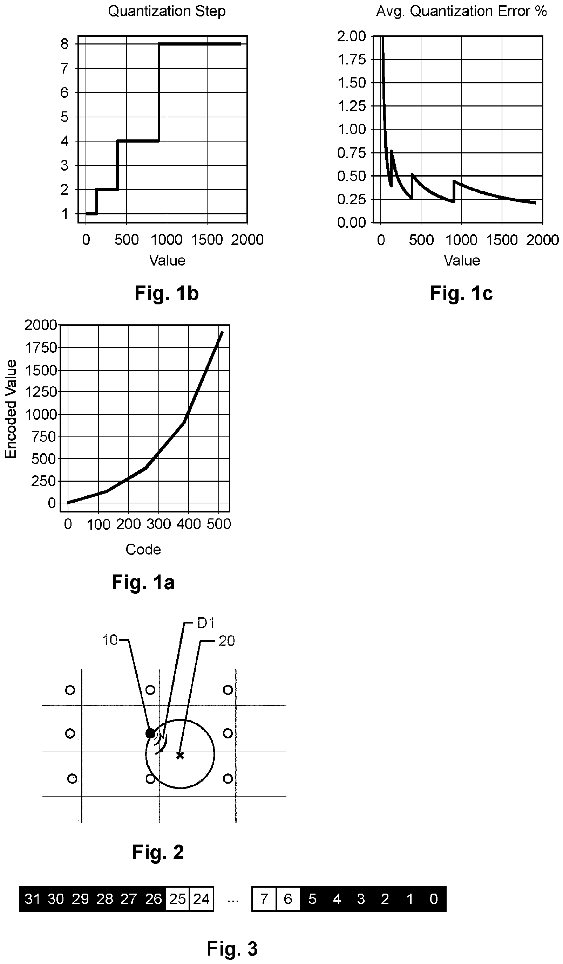

Figs. 1a-1c show the principle of Extended Range Encoding (ERC) as used in an embodiment of the invention. Specifically, in Fig. 1a, it is shown that the encodable value range increases from 0... 511 for a 9 bit integer and for a linear mapping with $2^9-1$ (x-axis) to 0... 1912 for a 9 bit ERC pair with $N_e = 2$, $N_m = 7$ (y-axis, $v_{max}=2^3(2^7 + 127) - 2^7 = 1912$ with $e = 2^2-1$ and $m = 2^7-1$). In Fig. 1b, it is shown that the absolute resolution decreases (i.e. the quantization step increases) at the values $v = 128$, $v =128+256 = 384$, and $v = 128+256+512 = 896$ (x-axis), respectively. However, as it is shown in Fig. 1c, the relative quantization error (y-axis, the quantization step as shown in Fig. 1b at a given value divided by the value itself) decreases with higher ERC encoded values v (x-axis). See the chapter "AMP Protocol Description", section 2.1 for details.

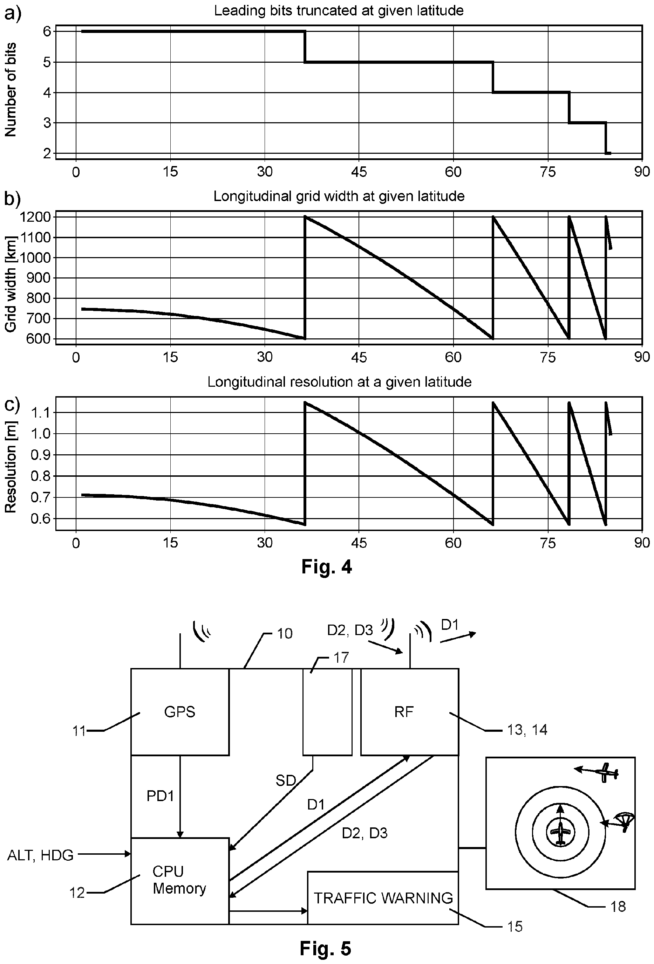

Figs. 2-4 show the principle of Adaptive Coordinate Truncation (ACT) as used in the invention, in which a broadcast device 10 transmits its truncated position PD1' in a data packet D1 relative to a local grid cell (rectangles) origin. In Fig. 2, a receiver ("x") (e.g. a second broadcast device 20) of a data packet D1 determines the correct position P1 (black solid dot) of the broadcast device 10 by taking proximity considerations due to limited radio range into account. Due to properties of the grid, any of the open dot positions are also mathematically correct and can only be discarded due to the inherent physical proximity of the sender and the receiver. In Fig. 3, the principle of creating the grid by binary truncation is explained. Six leading and six trailing bits (white on black) are removed from a base 32-bit signed integer, and the center 20 bits are transmitted (black on white) as an unsigned integer. The number of deleted trailing bits determines the extent to which resolution is lost, while the number of deleted leading bits determines the grid size or encodable separation due to a reduced encodable value range. The deletion of the trailing bits is performed after rounding to the closest admissible integer. In Fig. 4, the non-uniform grid of ACT is visualized: If a static bit truncation was used, the resulting grid size would contract towards the poles of the earth for the longitude dimension. As a consequence, the longitudinal extent would drop below the radio range at some point; a receiver could then no longer unambiguously determine the sender's position. Conversely, to maintain a sufficient grid size, longitude would require more bits in the transmission. ACT addresses this by dynamically adapting the longitude grid size with higher/ lower latitudes.

The following table (see also Section 2.2 of the chapter "AMP Protocol Description") provides the rule for constructing the longitude grid in an embodiment of the invention:

| Latitude range | # leading bits truncated | # trailing bits truncated | Longitude Resolution |
|---|---|---|---|
| \|lat\| < 36° | 6 | 6 | 0.0000064° |
| 36° <=\|lat\| < 66° | 5 | 7 | 0.0000128° |
| 66° <=\|lat\| < 78° | 4 | 8 | 0.0000256° |
| 78° <=\|lat\| < 84° | 3 | 9 | 0.0000512° |
| 84° <=\|lat\| | 2 | 10 | 0.0001024° |

The resulting resolution and grid sizes are shown in Fig. 4: In the top part (panel a), the number of truncated leading bits is shown as a function of the latitude in degrees; the closer the broadcast device gets to the poles (i.e. the more the latitude increases), the less leading bits are truncated from the longitude data PD1_LON. In the middle part (panel b) of Fig. 4, the resulting longitudinal grid size in km as a function of the latitude in degrees is shown, and in the lower part (panel c) the longitudinal resolution in m as a function of the latitude in degrees.

Fig. 5 shows a schematic view of a broadcast device 10 according to an embodiment of the invention as well as a display unit 18. The broadcast device 10 comprises a positioning device 11, a control unit 12 with memory, and a radio transceiver 13, 14. The broadcast device 10 is mounted at a first aircraft 1 (not shown) and receives pressure altitude (ALT) and heading (HDG) data from onboard navigation systems. The positioning device 11 (GPS) is configured to determine three dimensional position data PD1 indicative of a three-dimensional position P1 of the broadcast device/ of the aircraft 1. The control unit 12 (CPU) is configured to receive (via an internal serial bus) the position data PD1 as determined by the positioning device 11, store it in its memory and fuse the received GPS altitude data with the received pressure-based altitude data to improve altitude precision. Specifically, latitude data PD1_LAT and longitude data PD1_LON are stored as signed 32-bit integers.

Further, the control unit 12 determines truncated position data PD1' comprising truncated latitude data PD1'_LAT and truncated longitude data PD1'_LON, each having a bit width of 20 bits. The original altitude data P1_ALT is also comprised in the truncated position data PD1' with an offset of -1000 m above the geoid. To generate the truncated latitude/longitude data from the original untruncated latitude/longitude data, a rounding is performed by adding $2^5$ to the original latitude/longitude values and then truncating 6 least significant, i.e. trailing bits (i.e. from $2^0...2^5$). Thus, a resolution is reduced. These values are used for PD1_LAT and for PD1_LON with |PD1_LAT| < 36° and they are adapted for higher latitudes (i.e. positions towards the poles, see table above).

Then, a "grid celling" of the coordinate space is performed as described above with regards to Figs. 2-4 which effectively reduces the encodable value range. For this, specifically, 6 most significant, i.e. leading bits (i.e. from $2^{26}...2^{31}$) are truncated. These values are used for PD1_LAT and for PD1_LON with |PD1_LAT| < 36° and they are adapted for higher latitudes (i.e. positions towards the poles, see table above). Thus, it is ensured that a longitudinal extent and a latitudinal extent of the local grid cells are larger than a radio range of the radio transmitter. By means of truncation, memory space and bandwidth during later broadcasts is saved.

As a next step, the to-be-broadcasted data packet D1 is generated based on the truncated position data PD 1', heading HDG, and an identifier ID1 of the broadcast device stored in non-volatile memory.

In the described embodiment, this is all done in software (i.e. as a computer program product stored in a flash memory of the control unit) running on the control unit 12, although outsourcing certain operations to dedicated hardware units (e.g. for encryption/decryption) is possible as well. Acceleration data SD originating from an accelerometer 17 of the broadcast device 10 serves to augment the position data PD1. The data packet D1 is then sent via another internal serial bus to the radio transceiver 13 (RF) which wirelessly broadcasts the received data packet D1 (undirected transmission, non-connection based). The data packet D1 is indicative of the to-be-broadcasted information (ID1, truncated latitude, truncated longitude, altitude, aircraft type, ground track/ heading, ground speed as calculated from position updates, climb rate as calculated from altitude updates, turn rate as calculated from heading updates, movement mode, time and other, see sections 3.1.1 and 3.1.2 of the "AMP Protocol Description" for a list).

Updated position data PD1 (plus heading, speed, etc.) is determined at an update frequency of 1 Hz, i.e. a time frame duration is 1 s. In each of these time frames, two data packets D1 are broadcasted with the same information, one in each transmit-window. The nominal transmit/update rate is thus 2 data packets per second.

The data packet D1 comprises a header section and a payload section, wherein the header section is non-encrypted and wherein the payload section is encrypted by the AES algorithm with a key size of 128 bits (see the chapter "AMP Protocol Description" for details).

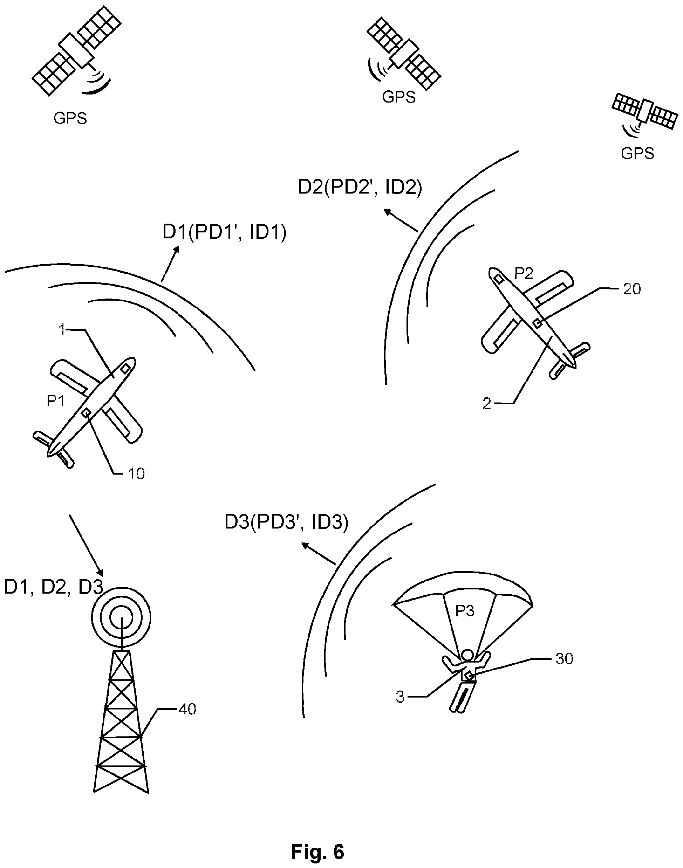

In addition to broadcasting the data packets D1, the radio transceiver 13, 14 (RF) also acts as a radio receiver 14 for receiving foreign data packets D2, D3 as broadcasted from the foreign broadcast devices 20, 30 (see Fig. 6). Such foreign data packets D2, D3 are indicative of information pertaining to second/third aircraft 2, 3 (see Fig. 6), and the broadcast device 10 is configured to calculate a collision probability between the first aircraft 1 and the second/third aircraft 2, 3 based on the information pertaining to the first aircraft 1 and based on the received information pertaining to the second/third aircraft 2, 3.

Specifically, the foreign data packets D2, D3 comprise foreign truncated position data PD2', PD3' with foreign truncated latitude data PD2'_LAT, PD3'_LAT, foreign truncated longitude data PD2'_LON, PD3'_LAT, and foreign altitude data PD2_ALT, PD3 ALT.

After reception of a foreign data packet D2, D3, the foreign truncated position data PD2', PD3', in particular the foreign truncated latitude data PD2'_LAT, PD3'_LAT and the foreign truncated longitude data PD2'_LON, PD3'_LON is disambiguated in the following way:

1. Latitude data PD2_LAT, PD3_LAT is disambiguated or reconstructed from PD2'_LAT, PD3'_LAT. This can be done due to the fact that the latitude grid (i.e. the latitudinal extent of the local grid cells) is uniform and that the position data PD1 (and thus PD1_LAT) is known.

2. The longitude grid parameters are determined based on the known position data PD2_LAT, PD3_LAT as computed in step 1 and based on the table above with regard to Figs. 2-4.

3. Longitude data PD2_LON, PD3 _LON is disambiguated or reconstructed from PD2'_LON, PD3'_LON, the known grid parameters from step 2, and PD 1 LON.

In these disambiguation step, it is checked whether a mathematically possible position in the same local grid cell or in adjacent local grid cells results in a lower distance. The solution with the lowest distance is taken as the correct one.

If the collision probability exceeds a certain threshold, a collision warning ("TRAFFIC WARNING") is issued to the pilot by means of an audiovisual display 15 of the broadcast device 10. This enhances the safety. A separate display unit 18 helps to improve the pilot's situational awareness by displaying the first ("own") aircraft 1 in the center of three circles and the second/third ("foreign") aircraft 2, 3 with their courses and velocities (arrow lengths, not to scale), also see Fig. 6. The display unit 18 can also be part of the broadcast device 10 (not shown).

This enables the use of the broadcast device 10 for collision avoidance with an improved situational awareness as well as the creation of a system for aircraft collision avoidance comprising a first broadcast device 10 at a first aircraft 1, a second broadcast device 20 at a second aircraft 2, and a third broadcast device 30 at a paraglider pilot. Such a system is shown in Fig. 6. The first aircraft 1 at position P1 is equipped with a broadcast device 10 as described above. The second aircraft 2 at position P2 is equipped with a broadcast device 20 which is - except for a different identifier ID2 - the same as the broadcast device 10 as described above. The third aircraft 3 (paraglider and pilot) at position P3 is equipped with a broadcast device 30 which is similar to the broadcast devices 10 and 20 as described above. As a difference to these, however, this foreign broadcast device 30 cannot receive data packets.

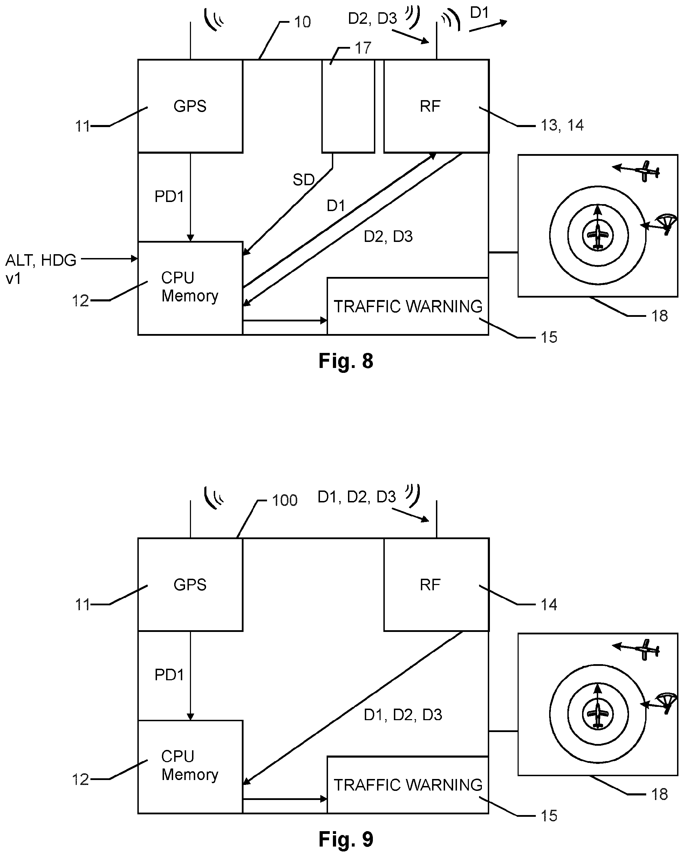

A non-sending/receiving-only ground-based receiver station 40 forwards received data packets D1, D2, and D3 to the internet/air traffic control (see Fig. 9 for such a receiver device 100).

The first broadcast device 10 wirelessly broadcasts information pertaining to the first aircraft 1 in the form of data packets D1. The second broadcast device 20 wirelessly broadcasts information pertaining to the second aircraft 2 in the form of data packets D2. The third broadcast device 30 wirelessly broadcasts information pertaining to the third aircraft 3 in the form of data packets D3.

Because the first broadcast device 10 receives the data packets D2, D3 as broadcasted from the second and third broadcast devices 20, 30 (and vice versa, except for the third broadcast device 30), a collision probability is easier to derive by taking the information pertaining to the first, second, and third aircraft 1, 2, 3 into account. This enhances safety and the pilots' situational awareness. Due to the invention with its broadcasting of truncated position data PD 1', PD2', and PD3', bandwidth is saved and additional information can be broadcasted.

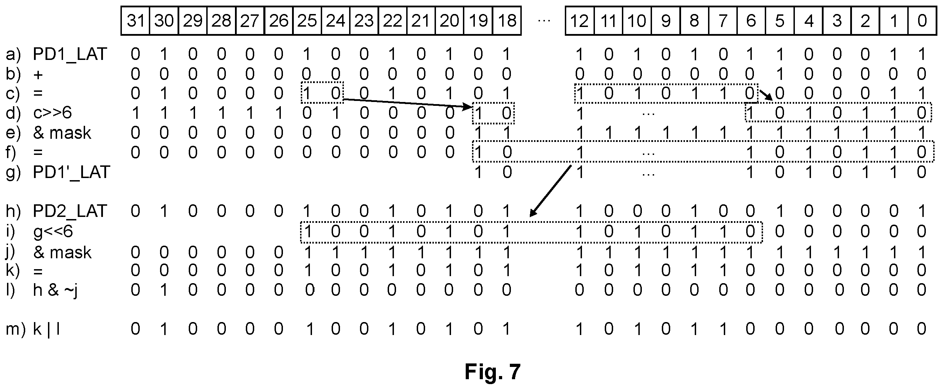

Fig. 7 shows a diagram visualizing determination of and reconstruction from truncated position data PD1' as used in the broadcast device 10/receiver device 100 of Figs. 5, 6, 8 and 9. The 32 bit integer from Fig. 3 with its bit values of $2^0...2^{31}$ is shown in the top panel. An example latitude data PD1_LAT is shown as input value in panel a in integer encoding. Because 6 trailing bits are to be truncated for resolution reduction, $2^5$ is added prior to truncation for rounding purposes (panel b). Then, the value in panel c) results. This value is then right-shifted by 6 bits (>>6), thus truncating the 6 trailing bits (reducing resolution) and resulting in the new value in panel d. As a last step, a mask (panel e) keeping the least significant 20 bits is ANDed (&), thus creating the truncated latitude data PD1'_LAT shown in panel f in its full and in panel g in its truncated, 20-bit wide form. This truncated form of panel g is then broadcasted in the data packet D1, thus saving 12 bits of bandwidth compared to the untruncated PD1_LAT of panel a. However, ambiguity is introduced by truncating, e.g., the bit 30 which is set to 1 in PD1_LAT (panel a).

A receiving broadcast device 20 knows its own untruncated latitude data PD2_LAT in the vicinity to PD1_LAT (e.g. bit 30 is set to 1 both for PD1_LAT and PD2_LAT) as shown in panel h. It receives the truncated latitude data PD1'_LAT shown in panel g. The received truncated position data PD1'_LAT is shifted by 6 trailing bits to the left (panel i) to compensate for the (lost) resolution reduction. Then, a mask defined as # bits in truncated data + # trailing bits for resolution reduction (panel j) is ANDed which gives the result in panel k. To compensate for the range reduction, the inversed mask ~j of panel j is ANDed with the known full latitude data PD2 _LAT of the receiving broadcast device (panel h), thus yielding the result in panel l. This result is then ORed with the result in panel k, thus yielding the full reconstruction of the original untruncated latitude data PD1_LAT in panel m (except for the rounding and the resolution reduction, which is lost). Please note here that an additional search (not shown) is performed in neighboring grid cells and the result with the closest distance is taken as the correct solution.

Fig. 8 shows a broadcast device 10 according to an embodiment the invention and a display unit 18, the broadcast device 10 comprising a positioning device 11, a control unit 12, and a radio transceiver 13, 14. The broadcast device 10 is mostly identical to the one shown in Fig. 5 described above with the following differences: The broadcast device 10 is configured to generate the data packet D1 in such a way that the data packet D1 comprises a pair c1 = (e1, m1) with an exponent e1 being a natural number and with a mantissa m1 being a natural number. The pair c1 is indicative of velocity data VD1 of the first aircraft 1, specifically a value v1 is indicative of a velocity vector magnitude of the first aircraft. This velocity vector magnitude can be received by the control unit 12 together with ALT and HDG from onboard navigation systems and/or it can be calculated from position updates of the aircraft. The mantissa m has a bit width of $N_{m1}$ = 7 bits and the exponent e has a bit width of $N_{e1}$ = 2 bits, wherein

$$v1 = 2^{e1} * (2^{Nm1} + m1) - 2^{Nm1}.$$

The bit widths $N_{m1}$ and $N_{e1}$ are selected such that a total bit width $N1 = N_{e1} + N_{m1}$ of the pair c1 is smaller than a total bit width of the value v1. A linear scaling factor A1 representing the physical unit "knots" is used for computing v1 according to $A * v1 = v_{aircraft}$. Please see chapter 2.1 of the "AMP protocol description" as well as Figs. 1a-1c for details.

The same applies mutatis mutandis for the foreign broadcast devices 20 and 30 as well as for the foreign data packets D2, D3 indicative of information pertaining to second/third aircraft 2, 3, respectively.

In other words, the foreign data packets D2, D3 each comprise a pair c2,3 = (e2,3, m2,3) with an exponent e2,3 being a natural number and with a mantissa m2,3 being a natural number. The pair c2,3 is indicative of a value v2,3,

wherein the mantissa m2,3 has a bit width of $N_{m2,3}$ and wherein the exponent e2,3 has a bit width of $N_{e2,3}$, and wherein v2,3 = $2^{e2,3} * (2^{Nm2,3} + m2,3) - 2^{Nm2,3}$. The bit widths $N_{m2,3}$ and $N_{e2,3}$ are selected such that a total bit width N2,3 = $N_{e2,3} + N_{m2,3}$ of the pair c2,3 is smaller than a total bit width of the value v2,3. A linear scaling factor A2,3 representing the physical unit/ resolution for the encoded numerical value v2,3 is also used as discussed above. The pair c2,3 as comprised in the foreign data packet D2,3 is indicative of foreign velocity data VD2,3 of the second/third aircraft 2,3, specifically the value v2,3 is indicative of a velocity vector magnitude of the second/third aircraft 2,3 (i.e. an absolute value of the aircraft's velocity).

Then, the broadcast device 10 is configured to compute (decode) the foreign velocity data VD2,3 using the received pair c2,3, specifically to compute the velocity vector magnitude v2,3 of the second/third aircraft 2,3 using the pair c2,3 as received in the foreign data packets D2,3. Thus, bandwidth is saved while a wide range of values v2,3 (i.e., velocity vector magnitudes) can be transferred.

Fig. 9 shows a receiver device 100 according to an embodiment of the invention and a display unit 18, the receiver device 100 comprising a positioning device 11, a control unit 12, and a radio receiver 14. The receiver device 100 is mostly identical to the broadcast device 10 shown in Fig. 8 with the following differences: Instead of a radio transceiver 13, 14, the receiver device 100 comprises a radio receiver 14 only and has therefore no capabilities to transmit data packets. Also no ALT, HDG, v1, and SD data is fed to the control unit 12 because no data packets are sent from the receiver device 100, but data packets D1, D2, and D3 are received by radio receiver 14. The receiver device 100 can therefore be used as a non-sending/receiving-only ground-based receiver station 40 as shown in Fig. 6.

The data packets D1, D2, and D3 as transmitted by the respective broadcast devices 10, 20, 30 are each indicative of information pertaining to a first/second/third aircraft 1, 2, 3 as discussed above (ID1,2,3, truncated latitude_1,2,3, truncated longitude_1,2,3, altitude_1,2,3, aircraft type_1,2,3, ground track! heading_1,2,3, ground speed_1,2,3, climb rate_1,2,3, turn rate_1,2,3, movement mode_1,2,3, time_1,2,3 and other, see sections 3.1.1 and 3.1.2 of the "AMP Protocol Description" for a list).

Because the receiver device 100 is configured to compute (decode) the foreign velocity data VD1,2,3 using the received pairs c1,2,3 in the data packets D1,D2,D3, specifically to compute the velocity vector magnitude v1,2,3 of the first/second/third aircraft 1,2,3 using the pair c1,2,3 as received in the data packet D1,2,3, a wide range of velocity vector magnitude v1,2,3 (i.e., velocity vector magnitudes) can be transferred while saving bandwidth.

Definitions:

Throughout the application documents, the term "aircraft" relates to all VFR-operated or VFR-operatable manned and teleoperated or automated unmanned flying or flyable objects such as gliders, towplanes, helicopters, parachutes, dropplanes, hanggliders, paragliders, single-engine piston planes, multi-engine piston planes, jet planes, (hot air) balloons, airships (such as, e.g. blimps), and UAVs (unmanned aerial vehicles such as drones).

The term "pilot" refers to either the human on board the aircraft or on the ground or on board another aircraft and supervising or piloting the aircraft from a distance. Additionally, in the case of fully automated systems, the term "pilot" may refer to, e.g. a flight control system.

The term "broadcast" relates a method of transferring a message (or here, the data packet) from a single transmitter to all recipients within radio range simultaneously, e.g. non-connection based. This is in contrast a point-to-point (e.g. connection or link-based) method in which a single sender communicates with a single receiver. Whenever the term "transmitter" or "sender" is used, it shall relate to "broadcaster".

Aircraft Motion Prediction (AMP) Protocol Description

*1. Introduction*

This section describes a possible implementation of the Aircraft Motion Prediction (AMP) Protocol, i.e. the structure and generation of a data packet used for the invention. All information in this section is to be treated in a non-limiting manner but as examples/ advantageous embodiments only. The AMP Protocol enables the following applications:

- Situation awareness
- Traffic monitoring
- Collision avoidance
- Tracking
- Identification

The following description omits the description of the physical and data link layers, as they are implemented by standard electronic components which are known to the skilled person (e.g. nRF905 from Nordic Semiconductors).

*1. 1. Coordinates Datum*

The WGS-84 standard is used throughout. Elevation is referenced to the WGS-84 ellipsoid surface (i.e. not the geoid, not MSL). Longitude and latitude are encoded in degrees, scaled 1E-7. South and West are negative.

*1.2. Timing and Synchronization*

To support a large number of broadcast devices, radio access is organized in time frames. A single time frame has a duration of, e.g. 1 s. Global time is available to any broadcast device via the positioning device. The number of data packets a broadcast device is allowed to send per time frame (i.e. the duty cycle) is regulated by law (e.g. 1% over one hour). All data packets per time frame have the same information contents (such as position, speed etc.) but can differ in timestamp, protocol version used, etc. (see section 2.4 below).

Transmission are organized in a plurality of transmit-windows per single time frame such that a single data packet is transmitted per transmit-window. As an example, with 1 sec time frames and 2 transmit-windows per time frame, the broadcast device nominally transmits a data packet once in each of these two transmit-windows. The nominal transmit/update rate is thus 2 data packets per second in this example.

Send timing is random within the transmit-window. If a packet collision is detected, a broadcast device retries after a random time delay. If the transmit-window ends before a successful transmission is made, the data packet is lost.

*2. Algorithms and Methods*

*2.1. Extended Range Encoding*

Extended Range Encoding (ERC) is a nonlinear encoding technique to encode a value with a large input range efficiently, using less bandwidth (bits) compared to a simple linear encoding. Due to the nonlinearity of the approach, it sacrifices (absolute) resolution at higher values (i.e. it utilizes a larger quantization interval), but achieves a much larger value range. The relative resolution (i.e. the ratio between the quantization interval and the encoded value) can be tuned to suit the intended application.

The method is comparable to floating point representations. The difference is that ERC uses integers and is flexible to adjust to the individual values and fields in the AMP protocol. ERC is parametrizable:

- Total number of bits N to use for code points (i.e. ERC representation of a numerical value v)
- Number of bits $N_m$ to use for mantissa m, and, derived from N and $N_m$, the number of bits $N_e$ to use for the exponent e.
- Whether negative values v are allowed, or only non-negative. Signed values are encoded by using the most significant bit of the exponent as a minus sign.
- A linear scaling factor A for every field representing the physical unit/ resolution for the encoded numerical value

Assume the pair c = (e, m) is a code point indicative of a to-be-transmitted value v, the code point comprising an exponent e and a mantissa m. Both e and m are non-negative integers, while v is a non-negative real number with a physical unit determined by the scaling factor A. The mantissa m has a bit width of $N_m$. The total bit with of c is N, thus the bit width of the exponent e is $N_e = (N-N_m)$.

For better readability, v* is defined as v* = ROUND(v / A) as the result of the value divided by the scaling factor, rounded to the nearest integer. Conversely, let v = A * v*. Then, the numerical input value v encoded by code point c is given by:

$$v^* = 2^e * (2^{Nm} + m) - 2^{Nm}$$

$$v = A * v^*$$

The reverse operation for computing c = (e, m) from v is defined by the following algorithm:

1. Let

$$1. \quad \text{Let } v^* = \text{ROUND}(v / A)$$

2. Compute the exponent: Find the largest e from the set of integers 0... $(2^{Ne} - 1)$ that satisfies

$$v^* \;>= 2^{Nm} \; (2^e - 1)$$

3. Compute the mantissa:

$$m = (v^* + 2^{Nm}) / 2^e - 2^{Nm}$$

The code point c = (e, m) can be represented as the binary concatenation of the exponent e and the mantissa m, yielding the binary representation of c:

$$c_{binary} = e << N_m \mid m$$

where "|" denotes the "bitwise OR" operation and "<<" the "shift left" operator.
An example for $N_e$ = 2, N = 9 yields:

- The encodable value range increases from 0... 511 (for a 9 bit integer and for a linear mapping with $2^9-1=511$) to 0... 1912 (for a 9-bit ERC mapping with $N_e$ = 2, $N_m$ = 7, and with $v_{max} = 2^3 (2^7 + 127) - 2^7 = 1912$ with e = $2^2-1$ and m = $2^7-1$), see Fig. 1a.

- The absolute resolution decreases (or the quantization interval increases) at v = 128, v =128+256, v = 128+256+512 = 896 and so forth, see Fig. 1b.

- The relative quantization error (i.e. the quantization step divided by the encoded value) decreases with higher ERC encoded values v, see Fig. 1c.

The parametrization in N, $N_e$ therefore defines the range of encodable values v and how quickly the resolution degrades with larger values. In addition to these parameters, the AMP protocol also applies a linear scaling A to every field which defines the physical unit/ resolution for the encoded numerical value v (e.g. 0.1 m/s for ground speed).

*2.2. Adaptive Coordinate Truncation*

Adaptive Coordinate Truncation (ACT) is a system to reduce the required bandwidth for transmitting the 2D position, exploiting that sender and receiver are necessarily local due to radio range limitations.

*2.2.1. Broadcasting ACT*

To transmit positions P1, the WGS-84 geodesic system is used. The base units are longitude and latitude, scaled to 1E-7° (pre truncation). Signed integers are used, north and east are positive, respectively. Altitude is relative to the ellipsoid (i.e. not the geoid) and not truncated, i.e. not part of this algorithm.

In ACT, the WGS-84 coordinate space is divided into grid cells, where the grid dimension is chosen to be well larger than the maximum expected radio range. A sender transmits its position relative to the local grid cell origin. A receiver can determine the grid cell that results in the lowest distance to the sender. By the principle of locality, this must then be the true solution, since other solutions are not physically possible due to the radio range.

The situation is depicted in Fig. 2: A receiver ("x") determines the correct position (black solid dot) by proximity. Due to properties of the grid, any of the open dot positions are also correct and can only be discarded due to the principle of locality.

ACT uses a grid that is not uniform: If it were, the effective grid size would contract towards the poles for the longitude dimension. As a consequence, the longitudinal extent would drop below the radio range at some point; a receiver could then no longer unambiguously determine the sender's position. Conversely, to maintain a sufficient grid size, longitude would require more bits in the transmission.

ACT addresses this by dynamically adapting the longitude grid size with higher/ lower latitudes.

The grid is created by binary truncation, which renders the calculations computationally efficient: Starting with a base 32-bit signed integer, a number of bits on the left and right are removed, and only the "center" part is transmitted: In the example in Fig. 3, six leading bits labelled 26... 31 and six trailing bits labelled 0...5 (white on black) are removed from a 32-bit input value, and the center 20 bits labelled 6...25 of the input value are transmitted (black on white). The number of deleted trailing bits determines the amount of lost resolution, while the number of deleted leading bits determine the grid size. The deletion of the trailing bits is performed after rounding to the closest admissible integer, i.e. a rounding up is performed if the most significant truncated bit is set to one. This is done by adding the value of the most significant to-be-truncated bit to the input value prior to trailing bit truncation.

In the specific example of Fig. 3 with six truncated trailing bits, $2^5$ is added to the input value prior to trailing bit truncation which results in a mapping of all original input values to 0, 64, 128, 192, ... after truncation. Negative input values map correctly due to the properties of 2's complement.

ACT uses a minimum grid size of 600 km (well above the radio range of approximately 100 km) and 20 bits (after truncation) for both longitude and latitude. Latitude deletes six leading and six trailing bits, resulting in a latitudinal grid size of approximately 750 km. For longitude, the white block with black text in Fig. 3 (the transmitted bits) is gradually shifted to the left as the sender approaches the poles. The shifts are optimized in a way to ensure a minimum longitudinal grid size (i.e. longitudinal extent of the grid cell) of 600 km.

The following table shows the rule for constructing the longitude grid:

| Latitude range | # leading bits truncated | # trailing bits truncated | Longitude Resolution |
| --- | --- | --- | --- |
| |lat| < 36° | 6 | 6 | 0.0000064° |
| 36° <=|lat| < 66° | 5 | 7 | 0.0000128° |
| 66° <=|lat| < 78° | 4 | 8 | 0.0000256° |
| 78° <=|lat| < 84° | 3 | 9 | 0.0000512° |
| 84° <=|lat| | 2 | 10 | 0.0001024° |

The resulting resolution and grid sizes are shown in Fig. 4.

*2.2.2. Receiving ACT*

A receiver can perform the following steps when receiving ACT coordinates:

1. Disambiguate latitude from the received truncated latitude data; this can be done due to the fact that the latitude grid (i.e. the latitudinal extent of the local grid cells) is uniform and that the own untruncated latitude data is known to the receiving broadcast device.
2. Determine longitude grid parameters from the table above and from the latitude data as computed in step 1.
3. Disambiguate longitude from the received truncated longitude data, the grid parameters from step 2, and the own untruncated longitude data as known to the receiving broadcast device.

*2.3. Enhanced Privacy Random ID*

To improve the ability to conceal an identity of a broadcast device while maintaining consistency for collision avoidance, the AMP protocol features Enhanced-Privacy Random ID (EPRID).

The method provides a chain of identifiers (IDs) that are broadcasted in a data packet so that signals can be correlated over a short time (continuous reception), but not over a long time (with missed data packets). A broadcast device's ID (i.e. the current identifier $ID_k$ for the time $T_k$) thereby changes randomly over time: A randomly obtained number RON is generated, e.g. by randomly selecting it from a finite set of numbers or randomly generating it, e.g. by means of a true random number generator or some sufficiently seeded pseudo random number generator (PRNG). This RON is then mixed together with the previous identifier $ID_{k-1}$ by means of a cryptographic hash function to generate the current identifier $ID_k$ which is therefore not equal to the previous identifier $ID_{k-1}$. The subsequent randomly obtained number (i.e. $RON_k$) is transmitted as part of the data packet, such that a receiver can - upon receipt of the next data packet - correlate a then received $ID_{k+1}$ to the previously received $ID_k$ without effort. The RON is advantageously chosen from the range $0...2^{Ne} - 1$, where Ne is the number of random bits used for generating the RON.

If a receiver continuously receives at least one data packet per distinct RON/ID pair, then it can readily derive the next ID from this.

However, if a receiver loses one or more data packets, it must start the observation from new since with unknown RON, the new ID cannot be related to the old one. Alternatively, the receiver can try to "guess" the RON. Guessing is rather fast for one or a few missed data packets (only a few bits of randomness were added), but the complexity increases exponentially with the number of bits that need to be guessed. The capability of a receiver to successfully calculate the correct sequence of RONs is effectively limited by two effects:

1. Computational feasibility: Especially when tracking hundreds of targets, e.g. in a wide-area receiver network, or when limited processing power is available, as is often the case in embedded (on-board) systems.

2. Ambiguity: When the number of random bits added (i.e. the amount of randomness introduced by each RON times the number of missed ID-updates) approaches the number of total bits of the ID, the ambiguity increases to the point where a unique reconstruction is no longer possible: There is always a sequence of RONs that generate any given ID from any other.

Example: The random ID has a bit width of 32 bits. An 8 bit value is used for the randomly obtained number RON. Note: The amount of randomness in the RON can be varied, 2 bits are advantageously chosen.

*2.3.1. Prerequisites*

Advantageously, a cryptographic hash function comprising bitwise XOR-/and bitshifting-operations is used for mixing the randomly obtained number $RON_{k-1}$ with the previous identifier $ID_{k-1}$ for generating the current identifier $ID_k$. Such a cryptographic hash function HASH() thus is of the form $ID_k = HASH(RON_{k-1}, ID_{k-1})$. HASH() is deterministic, fast to compute, small changes of the input lead to large changes of the output, and it is computationally infeasible to find the reverse operation.

*2.3.2. Sender*

On the sender, EPRID comprises the following steps:

1. Set k=1, initialize $ID_1$ by choosing a random unsigned 32-bit integer and/or using a fixed value which is e.g. stored in a non volatile memory.
2. At each time $T_k$, randomly choose a $RON_k$ from the set $0...2^{Ne}-1$.
3. Use the pair $(RON_K, ID_k)$ in AMP data packet broadcasts.
4. Advantageously after between 2 and 10 seconds, at time $T_{k+1}$, increment k by 1 and compute the new $ID_k$ from the previous $ID_{k-1}$ and the $RON_{k-1}$:

$$ID_k = HASH(RON_{k-1}, ID_{k-1});$$

5. Go to step 2.

The duration between the ID updates (step 4) and the number of bits to use for the randomness (Ne) can be chosen by the sender to trade off privacy vs. trackability. The default value is 10 s, 1 s is the minimum value. The default value for Ne is 2, the minimum 1, the maximum 8. The broadcast device may adapt the interval in flight. The ID update may happen at any time, but only after the RF time frame is completed.

*2.3.3. Receiver*

The receiver of a packet with a (RON, ID) pair performs the following steps:

1. Initialize an internal memory store for storing a list of (ID, ID') pairs, referenced as ID[i], ID'[i], wherein i is a natural number and refers to the i-th entry in the memory store.

2. When receiving a (RON, ID) pair, check the memory store if an entry i exists with ID = ID[i]. If a match is found, assume the new data packet originates from a known sender with a known current identifier ID. Break.

3. Else, check the memory store if an entry i exists with ID = ID'[i]. If a match is found, assume the new data packet originates from a known sender with an updated current identifier ID and update the memory store entry to (ID, HASH(RON, ID)). Break.

4. Else, assume the new data packet originates from an unknown sender. Add the pair (ID, HASH(RON, ID)) to the memory store.

5. Continue with step 2.

If no matching ID is found in step 3, a receiver may optionally employ a deeper search, i.e. over multiple ID updates, assuming that it has received EPRID-enabled data packets before. This requires a brute-force search. This is feasible mostly for ground-based receivers. Airborne devices for collision avoidance purposes will probably not do this, e.g. due to computational limitations of embedded systems.

*2.4. Dynamic Message Versioning*

Dynamic Message Versioning (DMV) is a method for simplifying data packet protocol updates (e.g., changing the precision, layout, size, or semantics of the contents/values, or modifying other aspects of the broadcasted data packets such as modulation, error correction, encryption, preambel etc.) while eliminating the putative need for a hard firmware expiration mechanism that may be present in prior art broadcast devices: The fundamental nature of such a distributed system as the broadcast devices according to the invention is that all participating nodes/broadcast devices need to understand the updated data packet protocol to retain compatibility. With the mentioned firmware expirations, prior art broadcast devices that did not receive a recent firmware or protocol upgrade stopped operating at a predefined date. Thus, the active firmware and thus data packet protocol versions at any given date could be controlled, allowing a concerted, global protocol update, e.g. once every year. However, this is only possible at the cost of manual user intervention for all devices, which is sometimes cumbersome and expensive, particularly in complex aircraft avionics systems.

DMV-enabled broadcast devices do not require such a firmware expiration mechanism while still allowing the protocol to change and improve, e.g. subject to the capabilities of involved broadcast devices. A DMV-enabled broadcast device can therefore be made backward-compatible indefinitely, i.e. it is then capable of receiving and sending AMP data packets of any (lower) version. This makes an older broadcast device visible to newer ones automatically. For vice-versa visibility, DMV can dynamically balance the use of different versions of the data packet protocol based on the capabilities of other receiving broadcast devices in the vicinity of the transmitting broadcast device. The maximum protocol version a DMV-enabled broadcast device is capable of receiving, processing, and transmitting is published in the "ver_max" field in the AMP data packet header and is thus transmitted with every AMP data packet (see below). A transmitting broadcast device can then fallback to a lower protocol version if a receiving broadcast device only understands this.

*2.4.1. DMV Operating Principle*

- Every transmitting DMV-enabled broadcast device ("sender") updates and maintains a list of nearby receiving DMV-enabled broadcast devices ("receivers") and their published maximum supported protocol version ( "ver_max"-field in the header section of an AMP data packet, see section 3 .1.1 below). Note that this maximum supported protocol version may deviate from the actual version used in a specific data packet ("ver"-field in the header section of an AMP data packet, see section 3.1.1 below).

- For every AMP data packet that is transmitted, the sender chooses the protocol version ("ver") based on this list. Heuristics are applied to determine this protocol version used for transmissions, thus maintaining a backward-compatible minimum connectivity with older clients, albeit at a lower update frequency. The parameters used thereby may be dynamically adapted over time: For instance, a lower data packet protocol version may get a higher priority and thus be transmitted more frequently, e.g., at least once every 2 seconds, immediately after a new AMP-protocol release. This allows as many clients as possible to catch up with the respective update. After a transition period, for example after 4 to 8 weeks, the use of lower-versioned AMP data packets may gradually be reduced, e.g., to at least once every 6 seconds.

- The most compatible protocol version is 0, compatible with all DMV-enabled and possibly even prior art broadcast devices that are not DMV-enabled. A base rate (e.g. once every 15 seconds) of protocol 0 data packets can be used to remain compatible indefinitely.

*2.4.2. Implementation*

In this section, the DMV-enabled broadcast device under consideration is denoted as "host" and nearby DMV-enabled broadcast devices are referred to as "clients". This section explains how the host selects the protocol version for broadcasting data packets based on data packets received by the host from the clients.

Note that both roles (host and client) are usually present in any DMV-enabled broadcast device, such that this rule applies symmetrically for every client as well. Non-senders (e.g. ground-based receiver stations) have no means to publish their DMV-capabilities. It is expected that these are updated frequently and/or support the latest protocol version at any time or at least with a short delay after a protocol/firmware update becomes available. Non-receivers (e.g. paraglider beacons) can transmit a predefined value for "ver max", thus indicating that they cannot receive data packets. Thus, they can then be excluded from DMV.

Let i be an index for the list of received AMP clients, as stored in the host's memory, with i being a non-zero natural number and i = 1...Nc with Nc being the total number of clients from which data packets are received. Clients from which no data packets are currently received are removed from this list. Let then "$ver\_max_i$" be a client's maximum supported AMP protocol version, as last received in the header section of a data packet sent by the client i. Hereby, it is assumed that "$ver\_max_i$" does not change over time of operation of client i, i.e. during broadcasting of data packets.

This is because firmware and thus protocol updates are usually not performed during operation of the broadcast device.

Let m[i] then be the count of missed (i.e. unreceivable) data packets for each client i, i.e. data packets that the respective client i cannot have received (e.g. due to the data packet not being sent) or data packets that the respective client i cannot have parsed (e.g. due to the data packet having a "ver" > "$ver\_max_i$"). This number-count m[i] is derived at the nominal AMP transmit or update rate taking transmit-windows into account: In other words, if the host deliberately does not send a data packet at all (e.g. due to RF collision or bandwidth management), this unsent data packet counts as a miss for all clients i and m[i] += 1 for all i = 1...Nc.

Because a plurality of transmit-windows is used per time frame (see section 1.2 above), the protocol version "ver" of the to-be-broadcasted data packet is determined before the start of each transmit-window. Whatever happens during the transmit-window's duration does not influence the transmission.

The array m[i] of missed data packets for each client i is then updated as follows:

1. At the beginning of any transmit-window, increment m[i] for every client i by 1.
2. If a data packet is sent successfully during the transmit-window: For every client i, set m[i] to zero for client i if the transmitted version "ver" as sent by the host is smaller than or equal to client's maximum supported version "$ver\_max_i$". Thus, if a client i can receive and process the data packet, m[i] = 0 for this respective client i.

Before the beginning of a transmit-window, the protocol version "ver" to be used for the broadcasted data packet in this transmit-window is determined as follows:

1. Let the desired client update interval $t_{cli}[i]$ for each client i be:

$$t_{cli}[i] = f(D[i], ver\_max_i, M_i)$$

where D[i] is a norm function indicative of the distance between the host and the client i, $ver\_max_i$ is the maximum supported protocol version of the client i, $M_i$ is indicative of metadata available for the client i, e.g. aircraft type or firmware version, and f() is a dynamic client update function. For a definition of the dynamic client update function f(), see section 2.4.3 below.

2. If the client i is in conflict with the host (i.e. if the client i is in danger of a collision with the host), set $t_{cli}[i]$ to 1.

3. Let the send gap g[i] for client i be the discrepancy between the number of missed data packets m[i] by the client i and the desired client update interval $t_{cli}[i]$. For any client i, the send gap g[i] is then given by

$$g[i] = m[i] - t_{cli}[i]$$

Note that the send gap g[i] starts negative and continuously increases if no client-supported transmission has been made. A gap of 0 or higher indicates that the desired client update interval $t_{cli}[i]$ is not fulfilled and therefore a need for transmitting a supported data packet to the client i arises.

4. If no g[i] is 0 or higher for all clients i, select the maximum supported protocol version of the host. Break.

5. If some or all g[i] are non-negative, i.e. 0 or higher (i.e. if the desired client update interval $t_{cli}[i]$ is missed for some or all clients i), select the protocol version "ver" as the minimum of "ver_max$_i$" of all clients with non-negative g[i].

### 2.4.3. Dynamic Updates

The desired client update interval $t_{cli}[i]$ of supported data packets for each client i is not fixed but may be adapted to the current situation in the population of broadcast devices, e.g. based on active firmware/ protocol versions and/ or based on situational parameters. This is reflected in the dynamic client update function $f(D[i], ver\_max_i, M_i)$ used for deriving $t_{cli}[i]$ as discussed above. The following basic rules apply:

- A base desired client update interval is based on the vehicle type $M_i$ of the client i. Examples are:

    ○ Hang glider, paraglider: 4: If 4 data packets have been missed by client i (i.e. if no supported data packet is received by client i for 4 transmit-windows), then transmit a supported fallback data packet (i.e. with a compatible protocol "ver") to the client i.
    ○ UAV: 2: If 2 data packets have been missed by client i (i.e. if no supported data packet is received by client i for 2 transmit-windows), then transmit a supported fallback data packet (i.e. with a compatible protocol "ver") to the client i.
    ○ All others: 1: If 1 data packet has been missed by client i (i.e. if no supported data packet is received by client i for 1 transmit-window), then transmit a supported fallback data packet (i.e. with a compatible protocol "ver") to the client i.

- If a client i signals no RX capabilities (i.e. if the published ver_max$_i$ is a predefined value), set $t_{cli}[i] = 20$: If 20 data packets have been missed by client i (i.e. if no supported data packet is received by client i for 20 transmit-windows), then transmit a supported fallback data packet (i.e. with a compatible protocol "ver") to the client i. This leads to an effective disregard of client i.

- If the horizontal distance as given by the norm function D[i] is larger than, e.g. 3 km, multiply $t_{cli}[i]$ by 2: If the client i is "far away" horizontally, then increase the number of allowed missed data packets before transmitting a supported fallback data packet (i.e. with a compatible protocol "ver") to the client i by a factor of 2.

- If the vertical separation as given by the norm function D[i] is larger than, e.g. 500 m, multiply $t_{cli}[i]$ by 2: If the client i is "far away" vertically, then increase the number of allowed missed data packets before transmitting a supported fallback data packet (i.e. with a compatible protocol "ver") to the client i by a factor of 2.

- If the approach time (distance divided by the relative speed vector projected on the relative position vector) of the client i is less than 30 seconds, set $t_{cli}[i]$ to 1: If the client i is on a collision course with the host with an expected approach in less than 30 sec, then transmit a supported fallback data packet (i.e. with a compatible protocol "ver") to the client i.

- If a client i's ver_max$_i$ is far behind the latest AMP protocol (e.g. if a firmware update for the client i is available for more than 2 years), multiple $t_{cli}[i]$ by 2: If the client i's firmware is "old", then increase the number of allowed missed data packets before transmitting a supported fallback data packet (i.e. with a compatible protocol "ver") to the client i by a factor of 2.

A placeholder client for protocol version 0 (most compatible protocol version) and a client update interval of 10 may be added to retain a base, worst-case compatibility.

*3. AMP protocol*

*3.1. Marshalling and Semantics*

A data packet comprises a header section and a payload data section. The size of the header section is 8 bytes, of the payload section is 16 bytes. The header is transmitted in clear (non-encrypted), the payload is encrypted. The data packet can be constructed as follows:

*3.1.1. Header*

The header section of the data packet comprises:

| Field | Description |
|---|---|
| id | Indicative of the identifier of the sender, can be either a current identifier $ID_k$ for EPRID (see above) or fixed. |
| ron | Indicative of a subsequent randomly obtained number $RON_k$ for generating $ID_{k+1}$ |
| urgency | Message urgency, can be between NORMAL and MAYDAY. Can have an effect on, e.g. hop_max. |
| hop_max | Maximum number of retransmissions for creating a mesh-network for message relaying between a plurality of broadcast devices. |
| hop_count | Current count of retransmissions, incremented with each message relay. |
| ver | AMP protocol version used by sender in this data packet. Can be evaluated by the receiver to determine which fields to process. |
| ver_max | Maximum AMP protocol version supported by the sender for receive or transmit. |

*3.1.2. Payload*

| Field | Unit/Scaling | Description |
|---|---|---|
| lat_trunc | | Latitude, truncated with ACT, see above. |
| lon_trunc | | Longitude, truncated with ACT, see above. |
| alt | m | Altitude. |
| acft_type | enum | Aircraft type: Undefined, Glider, Towplane, Helicopter, Parachute, Dropplane, Hangglider, Paraglider, Single-engine piston, Jet, Multi-engine, Balloon, Airship, Blimp, UAV, Static. |
| track | 1° | Ground track. |
| speed | .1 m/s | Ground speed, unsigned ERC, see above. |
| climb | .1 m/s | Climb rate, signed ERC, see above. |
| turnrate | .1 °/s | Turn rate, signed ERC. |
| mov_mode | enum | Discrete movement mode: On ground, Flying, Circling. |
| stealth | flag | Indicating intent of sender to reduce visibility |
| notrack | flag | Indicating intent of sender not to track his signal, e.g. with ground station receivers. |
| timestamp | .25 s | Unix epoch timestamp, in quarter seconds, UTC from GNSS. |

*3.2. Encryption and Decryption*

The payload is encrypted to ensure message integrity, system safety and provide protection for the relevant content against eavesdropping.

The AES algorithm with a key size of 128 bits is used. The key is fixed and shared by all participants of the system. Only the payload block (see Section 3.1.2) is encrypted, the header is transmitted in clear.

Prior to encryption, a 128-bit cryptographic nonce is mixed with the payload. The nonce is created deterministically from the header of the data packet, a time stamp of the data packet, and a secret constant. Because the cryptographic nonce contains the time stamp, replay attacks are not feasible.

The broadcasted, encrypted payload is generated as

$$payload_E = AES(nonce \wedge payload, key)$$

where "^" denotes the bitwise-XOR operator.

Note:

Any embodiments described with respect to the device shall similarly pertain to the method, the computer program product, the use, and the system. Synergetic effects may arise from different combinations of the embodiments although they might not be described in detail.

While there are shown and described presently preferred embodiments of the invention, it is to be distinctly understood that the invention is not limited thereto but may be otherwise variously embodied and practiced within the scope of the following claims.

**Claims**

1. A broadcast device (10) for wirelessly broadcasting information pertaining to a first aircraft (1), the broadcast device (10) comprising:

   - a positioning device (11) configured to determine position data (PD1) indicative of a position (P1) of the broadcast device (10),
   - a control unit (12) configured to:

     * receive the position data (PD1) as determined by the positioning device (11),
     * determine truncated position data (PD1') using at least a part of the received position data (PD1), wherein a bit width of the truncated position data (PD1') is smaller than a bit width of the position data (PD1), and
     * generate a data packet (D1) comprising the truncated position data (PD1') and an identifier (ID1) of the broadcast device (10) or values indicative thereof,

   wherein the broadcast device (10) further comprises

     - a radio transmitter (13) configured to receive the generated data packet (D1) and wirelessly broadcast the received data packet (D1),

   wherein the broadcasted data packet (D1) is indicative of the to-be-broadcasted information, and
   wherein the broadcast device (10) is configured to generate the data packet (D1) in such a way that the data packet (D1) comprises a pair c1 = (e1, m1) with an exponent e1 being a natural number and with a mantissa m1 being a natural number,
   wherein the pair c1 is indicative of a value v1,
   wherein the mantissa m has a bit width of $N_{m1}$ and wherein the exponent e has a bit width of $N_{e1}$,
   wherein

   $$v1 = 2^{e1} * (2^{Nm1} + m1) - 2^{Nm1}$$

   and wherein the bit widths $N_{m1}$ and $N_{e1}$ are selected such that a total bit width $N1=N_{e1}+N_{m1}$ of the pair c1 is smaller than a total bit width of the value v1.

2. The broadcast device (10) of claim 1 configured to generate the data packet (D1) in such a way that the pair c1 is indicative of velocity data of the first aircraft (1),
   in particular wherein the value v1 is indicative of a velocity vector magnitude of the first aircraft (1).

3. The broadcast device (10) of any of the preceding claims configured to determine the position (P1) such that the position data (PD1) comprises

- latitude data indicative of a latitude of the broadcast device (10) and
- longitude data indicative of a longitude of the broadcast device (10),

and in particular wherein the position data (PD1) further comprises

- altitude data indicative of an altitude of the broadcast device (10).

4. The broadcast device (10) of claim 3 configured to determine the truncated position data (PD1') using

- the latitude data such that the truncated position data (PD 1') comprises truncated latitude data and
- the longitude data such that the truncated position data (PD 1') comprises truncated longitude data,

and in particular wherein the broadcast device (10) is configured to determine the truncated position data (PD1') such that the truncated position data (PD1') comprises the altitude data.

5. The broadcast device (10) of any of the preceding claims configured to encode the position data (PD1) and/or the truncated position data (PD1') and/or the pair c1 as an integral data type.

6. The broadcast device (10) of any of the preceding claims configured to, for determining the truncated position data (PD1'), reduce a resolution of the latitude data and the longitude data.

7. The broadcast device (10) of claim 6 configured to, for reducing the resolution, truncate the latitude data and the longitude data in a binary representation by a first number of trailing bits, and in particular wherein said first number is between 6 and 10.

8. The broadcast device (10) of any of the claims 6 to 7 configured to, prior to or together with reducing the resolution, round the latitude data and the longitude data.

9. The broadcast device (10) of any of the preceding claims configured to, for determining the truncated position data (PD1'), reduce an encodable value range for the latitude data to obtain the truncated latitude data and for the longitude data to obtain the truncated longitude data.

10. The broadcast device (10) of claim 9 configured to, for reducing the encodable value range, truncate the latitude data and the longitude data in a binary representation by a second number of leading bits, and in particular wherein said second number is between 2 and 6.

11. The broadcast device (10) of any of the claims 9 to 10 configured to set the encodable value range such that an encodable longitudinal separation and an encodable latitudinal separation are both larger than a radio range of the broadcast device (10), in particular by a factor of 2 or more.

12. The broadcast device (10) of any of the claims 9 to 11 configured to set the encodable longitudinal separation depending on the latitude data.

13. The broadcast device (10) of any of the preceding claims further comprising a radio receiver (14) configured to receive a foreign data packet (D2) as broadcasted from a foreign broadcast device (20), the foreign data packet (D2) being indicative of information pertaining to a second aircraft (2),

wherein the foreign data packet (D2) comprises foreign truncated position data (PD2'), in particular foreign truncated latitude data and foreign truncated longitude data,
wherein the foreign data packet (D2) comprises a pair c2 = (e2, m2) with an exponent e2 being a natural number and with a mantissa m2 being a natural number,
wherein the pair c2 is indicative of a value v2,
wherein the mantissa m2 has a bit width of $N_{m2}$ and wherein the exponent e2 has a bit width of $N_{e2}$,
wherein

EP 4 275 301 B1

$$v2 = 2^{e2} * (2^{Nm2} + m2) - 2^{Nm2}$$

and wherein the bit widths $N_{m2}$ and $N_{e2}$ are selected such that a total bit width $N2=N_{e2}+N_{m2}$ of the pair c2 is smaller than a total bit width of the value v2, and
wherein the broadcast device (10) is configured to compute the value v2 using the pair c2,
and in particular wherein the broadcast device (10) is configured to calculate a collision probability and/or visualize information indicative of a situational awareness between the first aircraft (1) and the second aircraft (2) based on the information pertaining to the first aircraft (1) and based on the received information pertaining to the second aircraft (2).

14. The broadcast device (10) of claim 13 configured to

- disambiguate the foreign truncated position data (PD2'), in particular the foreign truncated latitude data and the foreign truncated longitude data using the position data (PD1), in particular using the latitude data and the longitude data.

15. The broadcast device (10) of any of the claims 13 to 14, wherein the pair c2 as comprised in the foreign data packet (D2) is indicative of foreign velocity data of the second aircraft (2),

in particular wherein the value v2 is indicative of a velocity vector magnitude of the second aircraft (2), and wherein the broadcast device (10) is configured to compute the foreign velocity data using the pair c2, in particular to compute the velocity vector magnitude v2 using the pair c2.

16. The broadcast device (10) of any of the preceding claims configured to generate the data packet (D1) in such a way that the data packet (D 1) comprises a header section and a payload section, and in particular wherein the header section is non-encrypted and/or wherein the payload section is encrypted.

17. The broadcast device (10) of claim 16 configured to encrypt the payload section of the data packet (D1) by means of a symmetric cryptographic algorithm,
and in particular wherein the broadcast device (10) is configured to use a cryptographic nonce based on the header section of the data packet (D 1), based on a time stamp, and based on a secret constant for encryption.

18. The broadcast device (10) of any of the preceding claims configured to generate the data packet (D1) in such a way that the data packet (D 1) comprises at least one of

- a timestamp, in particular in the payload section of the data packet,
- a packet protocol version, in particular in the header section of the data packet, and
- a maximum supported packet protocol version, in particular in the header section of the data packet.

19. The broadcast device (10) of any of the preceding claims configured to

- repeatedly determine updated position data (PD1) indicative of an updated position (P1) of the broadcast device (10),
- repeatedly determine updated truncated position data (PD1') using at least a part of the updated position data (PD1), and
- repeatedly generate and broadcast an updated data packet (D 1) comprising the updated truncated position data (PD1') and the identifier (ID1) of the broadcast device (10) or values indicative thereof,

and in particular wherein any time interval between two of such consecutive updates is between 0.1 s and 5 s, in particular is between 0.5 s and 1 s, and in particular is 1 s.

20. A receiver device (100) comprising:

- a radio receiver (14) configured to receive a foreign data packet (D2) as broadcasted from a foreign broadcast device (20), in particular of any of the preceding claims, the foreign data packet (D2) being indicative of information pertaining to a second aircraft (2),

wherein the foreign data packet (D2) comprises foreign truncated position data (PD2') indicative of a position P2 of the second aircraft (2), in particular foreign truncated latitude data and foreign truncated longitude data, wherein a bit width of the foreign truncated position data (PD2') is smaller than a bit width of foreign position data (PD2) being indicative of a position (P2) of the foreign broadcast device (20),

wherein the foreign data packet (D2) comprises a pair c2 = (e2, m2) with an exponent e2 being a natural number and with a mantissa m2 being a natural number,

wherein the pair c2 is indicative of a value v2,

wherein the mantissa m2 has a bit width of $N_{m2}$ and wherein the exponent e2 has a bit width of $N_{e2}$, wherein

$$v2 = 2^{e2} * (2^{Nm2} + m2) - 2^{Nm2}$$

and wherein the bit widths $N_{m2}$ and $N_{e2}$ are selected such that a total bit width $N2=N_{e2}+N_{m2}$ of the pair c2 is smaller than a total bit width of the value v2,

wherein the receiver device (100) further comprises

- a control unit (12) configured to:

* receive position data (PD1) indicative of a position (P1) of the receiver device (100),
* receive the foreign data packet (D2) as received by the radio receiver (14),
* disambiguate the foreign truncated position data (PD2'), in particular the foreign truncated latitude data and the foreign truncated longitude data using the position data (PD1), and
* compute the value v2 using the pair c2.

21. A method for, by means of a broadcast device (10), in particular of any one of the claims 1 to 19, wirelessly broadcasting information pertaining to a first aircraft (1), the method comprising steps of:

- providing the broadcast device (10) comprising a positioning device (11), a control unit (12), and a radio transmitter (13),
- by means of the positioning device (11) determining position data (PD1) indicative of a position (P1) of the broadcast device (10), wherein the position data (PD1) comprises latitude data indicative of a latitude of the broadcast device (10) and longitude data indicative of a longitude of the broadcast device (10),
- by means of the control unit (12):

* receiving the position data (PD1) as determined by the positioning device (11) and storing the received position data (PD1) in the memory,
* determining truncated position data (PD1') using the latitude data and the longitude data, wherein a bit width (S 1') of the truncated position data (PD 1') is smaller than a bit width of the position data (PD1), and
* generating a data packet (D1) comprising the truncated position data (PD1') and an identifier (ID1) of the broadcast device (10) or values indicative thereof, and

wherein the method comprises further steps of:

- by means of the radio transmitter (13) receiving the generated data packet (D1) and wirelessly broadcasting the received data packet (D1), wherein the broadcasted data packet (D1) is indicative of the to-be-broadcasted information, and
- generating the data packet (D1) in such a way that the data packet (D1) comprises a pair c1 = (e1, m1) with an exponent e1 being a natural number and with a mantissa m1 being a natural number,

wherein the pair c1 is indicative of a value v1,

wherein the mantissa m1 has a bit width of $N_{m1}$ and wherein the exponent e1 has a bit width of $N_{e1}$, wherein

$$v1 = 2^{e1} * (2^{Nm1} + m1) - 2^{Nm1}$$

and wherein the bit widths $N_{m1}$ and $N_{e1}$ are selected such that a total bit width $N1=N_{e1}+N_{m1}$ of the pair c1 is smaller than a total bit width of the value v1.

22. The method of claim 21 wherein the broadcast device (10) further comprises a radio receiver (14) and wherein the method comprises a further step of

- by means of the radio receiver (14) receiving a foreign data packet (D2) as broadcasted from a foreign broadcast device (20), the foreign data packet (D2) being indicative of information pertaining to a second aircraft (2),

wherein the foreign data packet (D2) comprises foreign truncated position data (PD2') with foreign truncated latitude data and foreign truncated longitude data,
wherein the foreign data packet (D2) comprises a pair c2 = (e2, m2) with an exponent e2 being a natural number and with a mantissa m2 being a natural number,
wherein the pair c2 is indicative of a value v2,
wherein the mantissa m2 has a bit width of $N_{m2}$ and wherein the exponent e2 has a bit width of $N_{e2}$,
wherein

$$v2 = 2^{e2} * (2^{Nm2} + m2) - 2^{Nm2}$$

and wherein the bit widths $N_{m2}$ and $N_{e2}$ are selected such that a total bit width $N2 = N_{e2} + N_{m2}$ of the pair c2 is smaller than a total bit width of the value v2,
and wherein the method comprises further steps of

- disambiguating the foreign truncated latitude data and the foreign truncated longitude data using the latitude data and the longitude data,
- computing the value v2 using the pair c2,

and in particular wherein the method comprises a further step of

- calculating a collision probability and/or visualizing information indicative of a situational awareness between the first aircraft (1) and the second aircraft (2) based on the information pertaining to the first aircraft (1) and based on the received information pertaining to the second aircraft (2).

23. A method for, by means of a receiver device (100), in particular of claim 20, wirelessly receiving information pertaining to a second aircraft (2), the method comprising steps of:

- providing the receiver device (100) comprising a control unit (12) and a radio receiver (14),
- by means of the radio receiver (14) receiving a foreign data packet (D2) as broadcasted from a foreign broadcast device (20), in particular of any one of the claims 1 to 19, the foreign data packet (D2) being indicative of the information pertaining to the second aircraft (2),

wherein the foreign data packet (D2) comprises foreign truncated position data (PD2'), in particular foreign truncated latitude data and foreign truncated longitude data, wherein a bit width of the foreign truncated position data (PD2') is smaller than a bit width of foreign position data (PD2) being indicative of a position (P2) of the foreign broadcast device (20),
wherein the foreign data packet (D2) comprises a pair c2 = (e2, m2) with an exponent e2 being a natural number and with a mantissa m2 being a natural number,
wherein the pair c2 is indicative of a value v2,
wherein the mantissa m2 has a bit width of $N_{m2}$ and wherein the exponent e2 has a bit width of $N_{e2}$,
wherein

$$v2 = 2^{e2} * (2^{Nm2} + m2) - 2^{Nm2}$$

and wherein the bit widths $N_{m2}$ and $N_{e2}$ are selected such that a total bit width $N2 = N_{e2} + N_{m2}$ of the pair c2 is smaller than a total bit width of the value v2,

- by means of the control unit (12):

* receiving position data (PD 1) indicative of a position (P 1) of the receiver device (100),
* receiving the foreign data packet (D2) as received by the radio receiver (14),
* disambiguating the foreign truncated position data (PD2'), in particular the foreign truncated latitude data and the foreign truncated longitude data using the position data (PD1), and
* computing the value v2 using the pair c2.

**24.** A system for aircraft collision avoidance comprising

- a first broadcast device (10) of any of the claims 1 to 19 at a first aircraft (1) for wirelessly broadcasting information pertaining to the first aircraft (1), and
- a second broadcast device (20) of any of the claims 1 to 19 at a second aircraft (2) for wirelessly broadcasting information pertaining to the second aircraft (2).

**Patentansprüche**

**1.** Eine Sendevorrichtung (10) zum drahtlosen Aussenden von Informationen, die ein erstes Luftfahrzeug (1) betreffen, wobei die Sendevorrichtung (10) umfasst:

- eine Ortungsvorrichtung (11), die ausgestaltet ist, um Positionsdaten (PD1) zu bestimmen, die eine Position (P1) der Sendevorrichtung (10) bezeichnen,
- eine Steuereinheit (12), die dazu ausgestaltet ist:

* die von der Ortungsvorrichtung (11) ermittelten Positionsdaten (PD1) zu empfangen,
* gekürzte Positionsdaten (PD1') zu bestimmen unter Verwendung mindestens eines Teils der empfangenen Positionsdaten (PD1), wobei eine Bitbreite der gekürzten Positionsdaten (PD1') kleiner als eine Bitbreite der Positionsdaten (PD1) ist, und
* ein Datenpaket (D1) zu erzeugen, das die gekürzten Positionsdaten (PD1') und eine Kennung (ID1) der Sendevorrichtung (10) oder diese bezeichnende Werte enthält,

wobei die Sendevorrichtung (10) weiterhin umfasst

- einen Funksender (13), der dazu ausgestaltet ist, das erzeugte Datenpaket (D1) zu empfangen und das empfangene Datenpaket (D1) drahtlos auszusenden,

wobei das ausgesendete Datenpaket (D1) für die auszusendenden Informationen bezeichnend ist, und wobei die Sendevorrichtung (10) ausgestaltet ist, um das Datenpaket (D1) so zu erzeugen, dass das Datenpaket (D1) ein Paar c1 = (e1, m1) umfasst, wobei ein Exponent e1 eine natürliche Zahl ist und eine Mantisse m1 eine natürliche Zahl ist,
wobei das Paar c1 bezeichnend für einen Wert v1 ist,
wobei die Mantisse m eine Bitbreite von $N_{m1}$ hat und wobei der Exponent e eine Bitbreite von $N_{e1}$ hat, wobei

$$v1 = 2^{e1} * (2^{Nm1} + m1) - 2^{Nm1}$$

und wobei die Bitbreiten $N_{m1}$ und $N_{e1}$ so gewählt sind, dass eine Gesamtbitbreite $N1 = N_{e1} + N_{m1}$ des Paares c1 kleiner ist als eine Gesamtbitbreite des Wertes v1.

**2.** Die Sendevorrichtung (10) nach Anspruch 1, derart ausgestaltet, dass sie das Datenpaket (D1) so erzeugt, dass das Paar c1 bezeichnend für Geschwindigkeitsdaten des ersten Luftfahrzeugs (1) ist, und insbesondere wobei der Wert v1 für eine Größe des Geschwindigkeitsvektors des ersten Luftfahrzeugs (1) bezeichnend ist.

**3.** Die Sendevorrichtung (10) nach einem der vorhergehenden Ansprüche, derart ausgestaltet, dass sie die Position (P1) so bestimmt, dass die Positionsdaten (PD1) umfassen

- Breitengraddaten, bezeichnend für einen Breitengrad der Sendevorrichtung (10), und

- Längengraddaten, bezeichnend für einen Längengrad der Sendevorrichtung (10),

und insbesondere wobei die Positionsdaten (PD1) weiterhin umfassen

- Höhendaten, bezeichnend für eine Höhe der Sendevorrichtung (10).

4. Die Sendevorrichtung (10) nach Anspruch 3, derart ausgestaltet, dass sie die gekürzten Positionsdaten (PD1') bestimmt unter Verwendung

- der Breitengraddaten, so dass die gekürzten Positionsdaten (PD1') gekürzte Breitengraddaten umfassen, und
- der Längengraddaten, so dass die gekürzten Positionsdaten (PD1') gekürzte Längengraddaten umfassen,

und insbesondere wobei die Sendevorrichtung (10) ausgestaltet ist, um die gekürzten Positionsdaten (PD1') so zu bestimmen, dass die gekürzten Positionsdaten (PD1') die Höhendaten umfassen.

5. Die Sendevorrichtung (10) nach einem der vorhergehenden Ansprüche, derart ausgestaltet, dass sie die Positionsdaten (PD1) und/oder die gekürzten Positionsdaten (PD1') und/oder das Paar c1 als integralen Datentyp codiert.

6. Die Sendevorrichtung (10) nach einem der vorhergehenden Ansprüche, derart ausgestaltet, dass sie zur Bestimmung der gekürzten Positionsdaten (PD1') eine Auflösung der Breitengraddaten und der Längengraddaten verringert.

7. Die Sendevorrichtung (10) nach Anspruch 6, derart ausgestaltet, dass sie zur Verringerung der Auflösung die Breitengraddaten und die Längengraddaten in einer binären Darstellung um eine erste Anzahl hinterer Bits abschneidet, und insbesondere wobei die erste Anzahl zwischen 6 und 10 liegt.

8. Die Sendevorrichtung (10) nach einem der Ansprüche 6 bis 7, derart ausgestaltet, dass sie vor oder zusammen mit der Reduzierung der Auflösung die Breitengraddaten und die Längengraddaten rundet.

9. Die Sendevorrichtung (10) nach einem der vorhergehenden Ansprüche, derart ausgestaltet, dass sie zur Bestimmung der gekürzten Positionsdaten (PD1') einen kodierbaren Wertebereich für die Breitengraddaten reduziert, um die gekürzten Breitengraddaten zu erhalten, und für die Längengraddaten, um die gekürzten Längengraddaten zu erhalten.

10. Die Sendevorrichtung (10) nach Anspruch 9, derart ausgestaltet, dass sie zur Verringerung des kodierbaren Wertebereichs die Breitengraddaten und die Längengraddaten in einer binären Darstellung um eine zweite Anzahl vorderer Bits abschneidet, und insbesondere wobei die zweite Anzahl zwischen 2 und 6 liegt.

11. Die Sendevorrichtung (10) nach einem der Ansprüche 9 bis 10, derart ausgestaltet, dass sie den codierbaren Wertebereich so einstellt, dass ein codierbarer Längenabstand und ein codierbarer Breitenabstand beide größer sind als eine Funkreichweite der Sendevorrichtung (10), insbesondere um einen Faktor 2 oder mehr.

12. Die Sendevorrichtung (10) nach einem der Ansprüche 9 bis 11, derart ausgestaltet, dass sie den kodierbaren Längenabstand in Abhängigkeit von den Breitengraddaten einstellt.

13. Die Sendevorrichtung (10) nach einem der vorhergehenden Ansprüche weiterhin umfassend einen Funkempfänger (14), der so ausgestaltet ist, dass er ein externes Datenpaket (D2) empfängt, das von einer externen Sendevorrichtung (20) ausgesendet wird, wobei das externe Datenpaket (D2) für Informationen bezeichnend ist, die ein zweites Luftfahrzeug (2) betreffen,

wobei das externe Datenpaket (D2) externe gekürzte Positionsdaten (PD2'), insbesondere externe gekürzte Breitengraddaten und externe gekürzte Längengraddaten umfasst,
wobei das externe Datenpaket (D2) ein Paar c2 = (e2, m2) umfasst, wobei ein Exponent e2 eine natürliche Zahl ist und eine Mantisse m2 eine natürliche Zahl ist,
wobei das Paar c2 bezeichnend für einen Wert v2 ist,
wobei die Mantisse m2 eine Bitbreite von $N_{m2}$ hat und wobei der Exponent e2 eine Bitbreite von $N_{e2}$ hat, wobei

$$v2 = 2^{e2} * (2^{Nm2} + m2) - 2^{Nm2}$$

und wobei die Bitbreiten $N_{m2}$ und $N_{e2}$ so gewählt sind, dass eine Gesamtbitbreite $N2 = N_{e2} + N_{m2}$ des Paares c2 kleiner ist als eine Gesamtbitbreite des Wertes v2, und

wobei die Sendevorrichtung (10) ausgestaltet ist, um den Wert v2 unter Verwendung des Paares c2 zu berechnen,

und insbesondere wobei die Sendevorrichtung (10) ausgestaltet ist, um eine Kollisionswahrscheinlichkeit zu berechnen und/oder Informationen zu visualisieren, die für eine Situationswahrnehmung zwischen dem ersten Luftfahrzeug (1) und dem zweiten Luftfahrzeug (2) bezeichnend sind, basierend auf den Informationen, die das erste Luftfahrzeug (1) betreffen, und basierend auf den empfangenen Informationen, die das zweite Luftfahrzeug (2) betreffen.

14. Die Sendevorrichtung (10) nach Anspruch 13, ausgestaltet um

- die externen gekürzten Positionsdaten (PD2'), insbesondere die externen gekürzten Breitengraddaten und die externen gekürzten Längengraddaten unter Verwendung der Positionsdaten (PD1), insbesondere unter Verwendung der Breitengraddaten und der Längengraddaten, zu disambiguieren.

15. Die Sendevorrichtung (10) nach einem der Ansprüche 13 bis 14, wobei das in dem externen Datenpaket (D2) enthaltene Paar c2 bezeichnend für externe Geschwindigkeitsdaten des zweiten Luftfahrzeugs (2) ist,

und insbesondere wobei der Wert v2 für eine Größe eines Geschwindigkeitsvektors des zweiten Luftfahrzeugs (2) bezeichnend ist, und

wobei die Sendevorrichtung (10) ausgestaltet ist, um die externen Geschwindigkeitsdaten unter Verwendung des Paares c2 zu berechnen, insbesondere um die Geschwindigkeitsvektorgröße v2 unter Verwendung des Paares c2 zu berechnen.

16. Die Sendevorrichtung (10) nach einem der vorhergehenden Ansprüche, derart ausgestaltet, dass sie das Datenpaket (D1) so erzeugt, dass das Datenpaket (D1) einen Header-Bereich und einen Nutzdatenbereich umfasst, und insbesondere wobei der Header-Bereich unverschlüsselt ist und/oder wobei der Nutzdatenbereich verschlüsselt ist.

17. Die Sendevorrichtung (10) nach Anspruch 16, derart ausgestaltet, dass sie den Nutzdatenbereich des Datenpakets (D1) mit Hilfe eines symmetrischen kryptografischen Algorithmus verschlüsselt,

und insbesondere wobei die Sendevorrichtung (10) ausgestaltet ist, um eine kryptographische Nonce auf der Grundlage des Header-Bereichs des Datenpakets (D1), auf der Grundlage eines Zeitstempels und auf der Grundlage einer geheimen Konstante zur Verschlüsselung zu verwenden.

18. Die Sendevorrichtung (10) nach einem der vorhergehenden Ansprüche, derart ausgestaltet, dass sie das Datenpaket (D1) so erzeugt, dass das Datenpaket (D1) mindestens eines der folgenden Elemente umfasst

- einen Zeitstempel, insbesondere im Nutzdatenbereich des Datenpakets,
- eine Paketprotokollversion, insbesondere im Header-Bereich des Datenpakets, und
- eine maximal unterstützte Paketprotokollversion, insbesondere im Header-Bereich des Datenpakets.

19. Die Sendevorrichtung (10) nach einem der vorhergehenden Ansprüche, ausgestaltet um

- wiederholt aktualisierte Positionsdaten (PD1) zu bestimmen, die für eine aktualisierte Position (P1) der Sendevorrichtung (10) bezeichnend sind,
- wiederholt aktualisierte gekürzte Positionsdaten (PD1') unter Verwendung mindestens eines Teils der aktualisierten Positionsdaten (PD1) zu bestimmen, und
- wiederholt ein aktualisiertes Datenpaket (D1) zu erzeugen und auszusenden, das die aktualisierten gekürzten Positionsdaten (PD1') und die Kennung (ID1) der Sendevorrichtung (10) oder diese bezeichnende Werte enthält,

und insbesondere, wobei jedes Zeitintervall zwischen zwei dieser aufeinanderfolgenden Aktualisierungen zwischen 0.1 s und 5 s, insbesondere zwischen 0.5 s und 1 s und insbesondere 1 s beträgt.

20. Eine Empfangsvorrichtung (100) umfassed:

- einen Funkempfänger (14), der ausgestaltet ist, um ein externes Datenpaket (D2) zu empfangen, das von einer externen Sendevorrichtung (20), insbesondere nach einem der vorhergehenden Ansprüche, ausgesendet wird, wobei das externe Datenpaket (D2) für Informationen bezeichnend ist, die ein zweites Luftfahrzeug (2) betreffen,

wobei das externe Datenpaket (D2) externe gekürzte Positionsdaten (PD2') umfasst, die eine Position P2 des zweiten Luftfahrzeugs (2) bezeichnen, insbesondere externe gekürzte Breitengraddaten und externe gekürzte Längengraddaten, wobei eine Bitbreite der externen gekürzten Positionsdaten (PD2') kleiner ist als eine Bitbreite von externen Positionsdaten (PD2), die eine Position (P2) der externen Sendevorrichtung (20) bezeichnen,
wobei das externe Datenpaket (D2) ein Paar c2 = (e2, m2) umfasst, wobei ein Exponent e2 eine natürliche Zahl ist und eine Mantisse m2 eine natürliche Zahl ist,
wobei das Paar c2 bezeichnend für einen Wert v2 ist,
wobei die Mantisse m2 eine Bitbreite von $N_{m2}$ hat und wobei der Exponent e2 eine Bitbreite von $N_{e2}$ hat, wobei

$$v2 = 2^{e2} * (2^{Nm2} + m2) - 2^{Nm2}$$

und wobei die Bitbreiten $N_{m2}$ und $N_{e2}$ so gewählt sind, dass eine Gesamtbitbreite $N2=N_{e2}+N_{m2}$ des Paares c2 kleiner ist als eine Gesamtbitbreite des Wertes v2,
wobei die Empfangsvorrichtung (100) weiterhin umfasst

- eine Steuereinheit (12), die dazu ausgestaltet ist:

\* Positionsdaten (PD1) zu empfangen, die eine Position (P1) der Empfangsvorrichtung (100) bezeichnen,
\* das externe Datenpaket (D2) zu empfangen, wie es vom Funkempfänger (14) empfangen wurde,
\* die externen gekürzten Positionsdaten (PD2'), insbesondere die externen gekürzten Breitengraddaten und die externen gekürzten Längengraddaten unter Verwendung der Positionsdaten (PD1) zu disambiguieren, und
\* den Wert v2 unter Verwendung des Paares c2 zu berechnen.

21. Ein Verfahren zum drahtlosen Aussenden von Informationen, die ein erstes Luftfahrzeug (1) betreffen, mittels einer Sendevorrichtung (10), insbesondere nach einem der Ansprüche 1 bis 19, wobei das Verfahren die folgenden Schritte umfasst:

- Bereitstellung der Sendevorrichtung (10) mit einer Ortungsvorrichtung (11), einer Steuereinheit (12) und einem Funksender (13),
- mittels der Ortungsvorrichtung (11) Bestimmung von Positionsdaten (PD1), die eine Position (P1) der Sendevorrichtung (10) bezeichnen, wobei die Positionsdaten (PD1) Breitengraddaten, die einen Breitengrad der Sendevorrichtung (10) bezeichnen, und Längengraddaten, die einen Längengrad der Sendevorrichtung (10) bezeichnen, umfassen,
- mit Hilfe der Steuereinheit (12):

\* Empfangen der von der Ortungsvorrichtung (11) bestimmten Positionsdaten (PD1) und Speichern der empfangenen Positionsdaten (PD1) in dem Speicher,
\* Bestimmen gekürzter Positionsdaten (PD1') unter Verwendung der Breitengraddaten und der Längengraddaten, wobei eine Bitbreite der gekürzten Positionsdaten (PD1') kleiner ist als eine Bitbreite der Positionsdaten (PD1), und
\* Erzeugen eines Datenpakets (D1), das die gekürzten Positionsdaten (PD1') und eine Kennung (ID1) der Sendevorrichtung (10) oder diese bezeichnende Werte enthält, und

wobei das Verfahren weitere Schritte umfasst:

- mittels des Funksenders (13), Empfangen des erzeugten Datenpakets (D1) und drahtloses Aussenden des erzeugten Datenpakets (D1), wobei das ausgesendete Datenpaket (D1) für die auszusendenden Informationen bezeichnend ist, und
- Erzeugen des Datenpakets (D1) derart, dass das Datenpaket (D1) ein Paar c1 = (e1, m1) umfasst, wobei ein Exponent e1 eine natürliche Zahl ist und eine Mantisse m1 eine natürliche Zahl ist,

wobei das Paar c1 bezeichnend für einen Wert v1 ist,
wobei die Mantisse m1 eine Bitbreite von $N_{m1}$ hat und wobei der Exponent e1 eine Bitbreite von $N_{e1}$ hat,
wobei

$$v1 = 2^{e1} * (2^{Nm1} + m1) - 2^{Nm1}$$

und wobei die Bitbreiten $N_{m1}$ und $N_{e1}$ so gewählt sind, dass eine Gesamtbitbreite N1=$N_{e1}$+$N_{m1}$ des Paares c1 kleiner ist als eine Gesamtbitbreite des Wertes v1.

22. Das Verfahren nach Anspruch 21, wobei die Sendevorrichtung (10) weiterhin einen Funkempfänger (14) umfasst und wobei das Verfahren einen weiteren Schritt umfasst

- mittels des Funkempfängers (14), Empfangen eines externen Datenpakets (D2), das von einer externen Sendevorrichtung (20) ausgesendet wird, wobei das externe Datenpaket (D2) für Informationen bezeichnend ist, die ein zweites Luftfahrzeug (2) betreffen,

wobei das externe Datenpaket (D2) externe gekürzte Positionsdaten (PD2') mit externen gekürzten Breitengraddaten und externen gekürzten Längengraddaten umfasst,
wobei das externe Datenpaket (D2) ein Paar c2 = (e2, m2) umfasst, wobei ein Exponent e2 eine natürliche Zahl ist und eine Mantisse m2 eine natürliche Zahl ist,
wobei das Paar c2 bezeichnend für einen Wert v2 ist,
wobei die Mantisse m2 eine Bitbreite von $N_{m2}$ hat und wobei der Exponent e2 eine Bitbreite von $N_{e2}$ hat, wobei

$$v2 = 2^{e2} * (2^{Nm2} + m2) - 2^{Nm2}$$

und wobei die Bitbreiten $N_{m2}$ und $N_{e2}$ so gewählt sind, dass eine Gesamtbitbreite N2=$N_{e2}$+$N_{m2}$ des Paares c2 kleiner ist als eine Gesamtbitbreite des Wertes v2,
und wobei das Verfahren die weiteren Schritte umfasst

- Disambiguierung der externen gekürzten Breitengraddaten und der externen gekürzten Längengraddaten unter Verwendung der Breitengraddaten und der Längengraddaten,
- Berechnung des Wertes v2 unter Verwendung des Paares c2,

und insbesondere, wobei das Verfahren einen weiteren Schritt umfasst

- Berechnen einer Kollisionswahrscheinlichkeit und/oder Visualisieren von Informationen, die bezeichnend für eine Situationswahrnehmung zwischen dem ersten Luftfahrzeug (1) und dem zweiten Luftfahrzeug (2) sind, basierend auf den Informationen, die das erste Luftfahrzeug (1) betreffen, und basierend auf den empfangenen Informationen, die das zweite Luftfahrzeug (2) betreffen.

23. Ein Verfahren zum drahtlosen Empfangen von Informationen, die ein zweites Luftfahrzeug (2) betreffen, mittels einer Empfangsvorrichtung (100), insbesondere nach Anspruch 20, wobei das Verfahren die folgenden Schritte umfasst:

- Bereitstellung der Empfangsvorrichtung (100) mit einer Steuereinheit (12) und einem Funkempfänger (14),
- Empfangen eines von einer externen Sendevorrichtung (20), insbesondere nach einem der Ansprüche 1 bis 19, ausgesendeten externen Datenpakets (D2) mittels des Funkempfängers (14), wobei das externe Datenpaket (D2) für die das zweite Luftfahrzeug (2) betreffenden Informationen bezeichnend ist,

wobei das externe Datenpaket (D2) externe gekürzte Positionsdaten (PD2'), insbesondere externe gekürzte Breitengraddaten und externe gekürzte Längengraddaten umfasst, wobei eine Bitbreite der externen gekürzten Positionsdaten (PD2') kleiner ist als eine Bitbreite von externen Positionsdaten (PD2), die für eine Position (P2) der externen Sendevorrichtung (20) bezeichnend sind,

wobei das externe Datenpaket (D2) ein Paar c2 = (e2, m2) umfasst, wobei ein Exponent e2 eine natürliche Zahl ist und eine Mantisse m2 eine natürliche Zahl ist,
wobei das Paar c2 bezeichnend für einen Wert v2 ist,
wobei die Mantisse m2 eine Bitbreite von $N_{m2}$ hat und wobei der Exponent e2 eine Bitbreite von $N_{e2}$ hat, wobei

$$v2 = 2^{e2} * (2^{Nm2} + m2) - 2^{Nm2}$$

und wobei die Bitbreiten $N_{m2}$ und $N_{e2}$ so gewählt sind, dass eine Gesamtbitbreite $N2=N_{e2}+N_{m2}$ des Paares c2 kleiner ist als eine Gesamtbitbreite des Wertes v2,

- mit Hilfe der Steuereinheit (12):

  * Empfangen von Positionsdaten (PD1), die für eine Position (P1) der Empfangsvorrichtung (100) bezeichnend sind,
  * Empfangen des externen Datenpakets (D2), wie es vom Funkempfänger (14) empfangen wurde,
  * Disambiguierung der externen gekürzten Positionsdaten (PD2'), insbesondere der externen gekürzten Breitengraddaten und der externen gekürzten Längengraddaten unter Verwendung der Positionsdaten (PD1), und
  * Berechnung des Wertes v2 unter Verwendung des Paares c2.

**24.** Ein System zur Vermeidung von Kollisionen von Luftfahrzeugen, umfassend

- eine erste Sendevorrichtung (10) nach einem der Ansprüche 1 bis 19 an einem ersten Luftfahrzeug (1) zur drahtlosen Aussendung von Informationen, die das erste Luftfahrzeug (1) betreffen, und
- eine zweite Sendevorrichtung (20) nach einem der Ansprüche 1 bis 19 an einem zweiten Luftfahrzeug (2) zur drahtlosen Aussendung von Informationen, die das zweite Luftfahrzeug (2) betreffen.

**Revendications**

**1.** Un dispositif de radiocommunication (10) pour émettre sans fil des informations relatives à un premier aéronef (1), le dispositif de radiocommunication (10) comprenant :

- un dispositif de positionnement (11) configuré pour déterminer les données de position (PD1) indiquant une position (P1) du dispositif de radiocommunication (10),
- une unité de commande (12) configurée pour :

  * recevoir les données de position (PD1) déterminées par le dispositif de positionnement (11),
  * déterminer des données de position tronquées (PD1') en utilisant au moins une partie des données de position reçues (PD1), une largeur de bit des données de position tronquées (PD1') étant inférieure à une largeur de bit des données de position (PD1), et
  * générer un paquet de données (D1) comprenant les données de position tronquées (PD1') et un identifiant (ID1) du dispositif de radiocommunication (10) ou des valeurs indicatives de celui-ci,

dans lequel le dispositif de radiocommunication (10) comprend en outre

- un émetteur radio (13) configuré pour recevoir le paquet de données généré (D1) et émettre sans fil le paquet de données reçu (D1),

dans lequel le paquet de données diffusé (D1) indique les informations à émettre, et
dans lequel le dispositif de radiocommunication (10) est configuré pour générer le paquet de données (D1) de manière à ce que le paquet de données (D1) comprenne une paire c1 = (e1, m1) avec un exposant e1 étant un nombre naturel et avec une mantisse m1 étant un nombre naturel,
dans lequel la paire c1 est indicative d'une valeur v1,
dans lequel la mantisse m a une largeur de bit de $_{Nm1}$ et dans lequel l'exposant e a une largeur de bit de $_{Ne1}$, dans lequel

$$v1 = 2^{e1} * (2^{Nm1} + m1) - 2^{Nm1}$$

et dans lequel les largeurs de bits $N_{m1}$ et $N_{e1}$ sont sélectionnées de telle sorte qu'une largeur de bit totale $N1=N_{e1}+N_{m1}$ de la paire c1 est inférieure à une largeur de bit totale de la valeur v1.

2.  Le dispositif de radiocommunication (10) selon la revendication 1, configuré pour générer le paquet de données (D1) de telle sorte que la paire c1 indique les données de vitesse du premier aéronef (1), en particulier, la valeur v1 indique une magnitude du vecteur de vitesse du premier aéronef (1).

3.  Le dispositif de radiocommunication (10) selon l'une des revendications précédentes, configuré pour déterminer la position (P1) de telle sorte que les données de position (PD1) comprennent

    - des données de latitude indiquant la latitude du dispositif de radiocommunication (10) et
    - des données de longitude indiquant la longitude du dispositif de radiocommunication (10),

    et en particulier dans lequel les données de position (PD1) comprennent en outre

    - des données d'altitude indiquant l'altitude du dispositif de radiocommunication (10).

4.  Le dispositif de radiocommunication (10) selon la revendication 3, configuré pour déterminer les données de position tronquées (PD1') en utilisant

    - les données de latitude de sorte que les données de position tronquées (PD1') comprennent les données de latitude tronquées et
    - les données de longitude de sorte que les données de position tronquées (PD1') comprennent des données de longitude tronquées,

    et en particulier dans lequel le dispositif de radiocommunication (10) est configuré pour déterminer les données de position tronquées (PD1') de sorte que les données de position tronquées (PD1') comprennent les données d'altitude.

5.  Le dispositif de radiocommunication (10) selon l'une des revendications précédentes, configuré pour coder les données de position (PD1) et/ou les données de position tronquées (PD1') et/ou la paire c1 en tant que type de données intégral.

6.  Le dispositif de radiocommunication (10) selon l'une des revendications précédentes, configuré pour, afin de déterminer les données de position tronquées (PD1'), réduire la résolution des données de latitude et de longitude.

7.  Le dispositif de radiocommunication (10) selon la revendication 6, configuré pour, afin de réduire la résolution, tronquer les données de latitude et de longitude dans une représentation binaire par un premier nombre de bits de fin, et en particulier dans lequel ce premier nombre est compris entre 6 et 10.

8.  Le dispositif de radiocommunication (10) selon l'une des revendications 6 à 7, configuré pour arrondir les données de latitude et de longitude, avant ou en même temps que la réduction de la résolution.

9.  Le dispositif de radiocommunication (10) selon l'une des revendications précédentes, configuré pour, afin de déterminer les données de position tronquées (PD1'), réduire une plage de valeurs codables pour les données de latitude afin d'obtenir les données de latitude tronquées et pour les données de longitude afin d'obtenir les données de longitude tronquées.

10. Le dispositif de radiocommunication (10) selon la revendication 9, configuré pour, afin de réduire la plage de valeurs codables, tronquer les données de latitude et de longitude dans une représentation binaire par un deuxième nombre de bits de tête, et en particulier dans lequel ce deuxième nombre est compris entre 2 et 6.

11. Le dispositif de radiocommunication (10) selon l'une des revendications 9 à 10, configuré pour définir la plage de valeurs codables de telle sorte qu'une séparation longitudinale codable et une séparation latitudinale codable soient toutes deux supérieures à une plage radio du dispositif de radiocommunication (10), en particulier d'un facteur de 2 ou plus.

**12.** Le dispositif de radiocommunication (10) selon l'une des revendications 9 à 11, configuré pour définir la séparation longitudinale codable en fonction des données de latitude.

**13.** Le dispositif de radiocommunication (10) selon l'une des revendications précédentes, comprenant en outre un récepteur radio (14) configuré pour recevoir un paquet de données étrangères (D2) diffusé par un dispositif de radiocommunication étranger (20), le paquet de données étrangères (D2) indiquant des informations relatives à un deuxième aéronef (2),

dans lequel le paquet de données étrangères (D2) comprend des données de position tronquées étrangères (PD2'), en particulier des données de latitude tronquées étrangères et des données de longitude tronquées étrangères,
dans lequel le paquet de données étrangères (D2) comprend une paire c2 = (e2, m2) dont l'exposant e2 est un nombre naturel et dont la mantisse m2 est un nombre naturel,
dans lequel la paire c2 est indicative d'une valeur v2,
dans lequel la mantisse m2 a une largeur de bit de $N_{m2}$ et dans lequel l'exposant e2 a une largeur de bit de $N_{e2}$,
dans lequel

$$v2 = 2^{e2} * (2^{Nm2} + m2) - 2^{Nm2}$$

et dans lequel les largeurs de bits $N_{m2}$ et $N_{e2}$ sont sélectionnées de telle sorte qu'une largeur de bit totale $N2 = N_{e2} + N_{m2}$ de la paire c2 est inférieure à une largeur de bit totale de la valeur v2, et
dans lequel le dispositif de radiocommunication (10) est configuré pour calculer la valeur v2 à l'aide de la paire c2, et en particulier dans lequel le dispositif de radiocommunication (10) est configuré pour calculer une probabilité de collision et/ou visualiser des informations indiquant la situation entre le premier aéronef (1) et le deuxième aéronef (2) sur la base des informations relatives au premier aéronef (1) et sur la base des informations reçues relatives au deuxième aéronef (2).

**14.** Le dispositif de radiocommunication (10) selon la revendication 13, configuré pour

- désambiguïser les données de position tronquées étrangères (PD2'), en particulier les données de latitude tronquées étrangères et les données de longitude tronquées étrangères, à l'aide des données de position (PD1), en particulier à l'aide des données de latitude et des données de longitude.

**15.** Le dispositif de radiocommunication (10) selon l'une des revendications 13 à 14, dans lequel la paire c2 comprise dans le paquet de données étrangères (D2) indique des données de vitesse étrangères du deuxième aéronef (2),

en particulier, dans lequel la valeur v2 indique une magnitude de vecteur de vitesse du deuxième aéronef (2), et le dispositif de radiocommunication (10) est configuré pour calculer les données de vitesse étrangères à l'aide de la paire c2, en particulier pour calculer la magnitude du vecteur de vitesse v2 à l'aide de la paire c2.

**16.** Le dispositif de radiocommunication (10) selon l'une des revendications précédentes, configuré pour générer le paquet de données (D1) de telle sorte que le paquet de données (D1) comprenne une section d'en-tête et une section de charge utile, et en particulier dans lequel la section d'en-tête n'est pas cryptée et/ou dans lequel la section de charge utile est cryptée.

**17.** Le dispositif de radiocommunication (10) selon la revendication 16, configuré pour crypter la section des données utiles du paquet de données (D1) au moyen d'un algorithme cryptographique symétrique,
et en particulier dans lequel le dispositif de radiocommunication (10) est configuré pour utiliser un nonce cryptographique basé sur la section d'en-tête du paquet de données (D1), basé sur un horodatage et basé sur une constante secrète pour le cryptage.

**18.** Le dispositif de radiocommunication (10) selon l'une des revendications précédentes, configuré pour générer le paquet de données (D1) de manière à ce que le paquet de données (D1) comprenne au moins l'un des éléments suivants

- un horodatage, en particulier dans la section des données utiles du paquet de données,
- une version du protocole du paquet, en particulier dans la section de l'en-tête du paquet de données, et

- une version de protocole de paquet maximale prise en charge, en particulier dans la section d'en-tête du paquet de données.

**19.** Le dispositif de radiocommunication (10) selon l'une des revendications précédentes, configuré pour

- déterminer à plusieurs reprises des données de position actualisées (PD1) indiquant une position actualisée (P1) de l'appareil de radiocommunication (10),
- déterminer à plusieurs reprises les données de position tronquées mises à jour (PD1') en utilisant au moins une partie des données de position mises à jour (PD1), et
- générer et émettre de manière répétée un paquet de données actualisées (D1) comprenant les données de position tronquées actualisées (PD1') et l'identifiant (ID1) du dispositif de radiocommunication (10) ou des valeurs indicatives de celui-ci,

et en particulier dans lequel tout intervalle de temps entre deux de ces mises à jour consécutives est compris entre 0,1 s et 5 s, en particulier entre 0,5 s et 1 s, et en particulier est de 1 s.

**20.** Un dispositif récepteur (100) comprenant :

- un récepteur radio (14) configuré pour recevoir un paquet de données étrangères (D2) émis par un dispositif de radiocommunication étranger (20), en particulier selon l'une des revendications précédentes, le paquet de données étrangères (D2) étant indicatif d'informations relatives à un deuxième aéronef (2),

le paquet de données étrangères (D2) comprend des données de position tronquées étrangères (PD2') indiquant une position P2 du deuxième aéronef (2), en particulier des données de latitude tronquées étrangères et des données de longitude tronquées étrangères, une largeur de bit des données de position tronquées étrangères (PD2') étant inférieure à une largeur de bit des données de position étrangères (PD2) indiquant une position (P2) du dispositif de radiocommunication étranger (20),
le paquet de données étrangères (D2) comprenant une paire $c2 = (e2, m2)$ dont l'exposant $e2$ est un nombre naturel et dont la mantisse $m2$ est un nombre naturel,
dans lequel la paire $c2$ est indicative d'une valeur $v2$,
dans lequel la mantisse $m2$ a une largeur de bit de $N_{m2}$ et dans lequel l'exposant $e2$ a une largeur de bit de $N_{e2}$,
dans lequel

$$v2 = 2^{e2} * (2^{Nm2} + m2) - 2^{Nm2}$$

et dans lequel les largeurs de bits $N_{m2}$ et $N_{e2}$ sont sélectionnées de telle sorte qu'une largeur de bit totale $N2 = N_{e2} + N_{m2}$ de la paire $c2$ est inférieure à une largeur de bit totale de la valeur $v2$, et
dans lequel le dispositif récepteur (100) comprend en outre

- une unité de commande (12) configurée pour :

\* recevoir des données de position (PD1) indiquant une position (P1) du dispositif récepteur (100),
\* recevoir le paquet de données étrangères (D2) tel qu'il a été reçu par le récepteur radio (14),
\* désambiguïser les données de position tronquées étrangères (PD2'), en particulier les données de latitude tronquées étrangères et les données de longitude tronquées étrangères à l'aide des données de position (PD1), et
\* calculer la valeur $v2$ en utilisant la paire $c2$.

**21.** Un procédé pour, au moyen d'un dispositif de radiocommunication (10), en particulier selon l'une des revendications 1 à 19, émettre sans fil des informations relatives à un premier aéronef (1), le procédé comprenant les étapes suivantes :

- fournir le dispositif de radiocommunication (10) comprenant un dispositif de positionnement (11), une unité de commande (12) et un émetteur radio (13),
- au moyen du dispositif de positionnement (11), déterminer des données de position (PD1) indiquant une position (P1) du dispositif de radiocommunication (10), les données de position (PD1) comprenant des données de latitude indiquant une latitude du dispositif de radiocommunication (10) et des données de longitude indiquant une longitude du dispositif de radiocommunication (10),
- au moyen de l'unité de commande (12) :

* recevoir les données de position (PD1) déterminées par le dispositif de positionnement (11) et stocker les données de position reçues (PD1) dans la mémoire,
* déterminer des données de position tronquées (PD1') à l'aide des données de latitude et de longitude, une largeur de bit (S1') des données de position tronquées (PD1') étant inférieure à une largeur de bit des données de position (PD1), et
* générer un paquet de données (D1) comprenant les données de position tronquées (PD1') et un identifiant (ID1) du dispositif de radiocommunication (10) ou des valeurs indicatives de celui-ci, et

le procédé comprenant des étapes supplémentaires consistant à

- recevoir, au moyen de l'émetteur radio (13), le paquet de données généré (D1) et émettre sans fil le paquet de données reçu (D1), le paquet de données émis (D1) indiquant les informations à émettre, et
- générer le paquet de données (D1) de telle sorte que le paquet de données (D1) comprenne une paire c1 = (e1, m1) dont l'exposant e1 est un nombre naturel et dont la mantisse m1 est un nombre naturel,

dans lequel la paire c1 est indicative d'une valeur v1,
dans lequel la mantisse m1 a une largeur de bit de $N_{m1}$ et dans lequel l'exposant e1 a une largeur de bit de $N_{e1}$,
dans lequel

$$v1 = 2^{e1} * (2^{Nm1} + m1) - 2^{Nm1}$$

et dans lequel les largeurs de bits $N_{m1}$ et $N_{e1}$ sont sélectionnées de telle sorte qu'une largeur de bit totale $N1 = N_{e1} + N_{m1}$ de la paire c1 est inférieure à une largeur de bit totale de la valeur v1.

22. Le procédé selon la revendication 21, dans lequel le dispositif de radiocommunication (10) comprend en outre un récepteur radio (14) et dans lequel le procédé comprend une étape supplémentaire consistant à

- recevoir, par le récepteur radio (14), un paquet de données étrangères (D2) émis par un dispositif de radiocommunication étranger (20), le paquet de données étrangères (D2) indiquant des informations relatives à un deuxième aéronef (2),

le paquet de données étrangères (D2) comprenant des données de position tronquées étrangères (PD2') avec des données de latitude tronquées étrangères et des données de longitude tronquées étrangères,
le paquet de données étrangères (D2) comprenant une paire c2 = (e2, m2) dont l'exposant e2 est un nombre naturel et dont la mantisse m2 est un nombre naturel,
dans lequel la paire c2 est indicative d'une valeur v2,
dans lequel la mantisse m2 a une largeur de bit de $N_{m2}$ et dans lequel l'exposant e2 a une largeur de bit de $N_{e2}$,
dans lequel

$$v2 = 2^{e2} * (2^{Nm2} + m2) - 2^{Nm2}$$

et dans lequel les largeurs de bits $N_{m2}$ et $N_{e2}$ sont sélectionnées de telle sorte qu'une largeur de bit totale $N2 = N_{e2} + N_{m2}$ de la paire c2 est inférieure à une largeur de bit totale de la valeur v2, et
et le procédé comprenant des étapes supplémentaires consistant à

- désambiguïser les données de latitude tronquée étrangère et les données de longitude tronquée étrangère à l'aide des données de latitude et des données de longitude,
- calculer la valeur v2 en utilisant la paire c2,

et en particulier le procédé comprenant une étape supplémentaire consistant à

- calculer une probabilité de collision et/ou visualiser des informations indiquant la situation entre le premier aéronef (1) et le deuxième aéronef (2) sur la base des informations relatives au premier aéronef (1) et sur la base des informations reçues relatives au deuxième aéronef (2).

23. Un procédé pour recevoir sans fil, au moyen d'un dispositif récepteur (100), en particulier selon la revendication 20, des informations relatives à un deuxième aéronef (2), le procédé comprenant les étapes de :

- fournir le dispositif récepteur (100) comprenant une unité de commande (12) et un récepteur radio (14),
- au moyen du récepteur radio (14), recevoir un paquet de données étrangères (D2) diffusé par un dispositif de radiocommunication étranger (20), en particulier selon l'une des revendications 1 à 19, le paquet de données étrangères (D2) étant indicatif de l'information relative au deuxième aéronef (2),

le paquet de données étrangères (D2) comprenant des données de position tronquées étrangères (PD2'), en particulier des données de latitude tronquées étrangères et des données de longitude tronquées étrangères, une largeur de bit des données de position tronquées étrangères (PD2') étant inférieure à une largeur de bit des données de position étrangères (PD2) indiquant une position (P2) du dispositif de radiocommunication étranger (20),
le paquet de données étrangères (D2) comprenant une paire c2 = (e2, m2) dont l'exposant e2 est un nombre naturel et dont la mantisse m2 est un nombre naturel,
dans lequel la paire c2 est indicative d'une valeur v2,
dans lequel la mantisse m2 a une largeur de bit de $N_{m2}$ et dans lequel l'exposant e2 a une largeur de bit de $N_{e2}$,
dans lequel

$$v2 = 2^{e2} * (2^{Nm2} + m2) - 2^{Nm2}$$

et dans lequel les largeurs de bits $N_{m2}$ et $N_{e2}$ sont sélectionnées de telle sorte qu'une largeur de bit totale $N2 = N_{e2} + N_{m2}$ de la paire c2 est inférieure à une largeur de bit totale de la valeur v2,

- au moyen de l'unité de commande (12) :

* recevoir des données de position (PD1) indiquant une position (P1) du dispositif récepteur (100),
* recevoir le paquet de données étrangères (D2) tel qu'il a été reçu par le récepteur radio (14),
* désambiguïser les données de position tronquées étrangères (PD2'), en particulier les données de latitude tronquées étrangères et les données de longitude tronquées étrangères à l'aide des données de position (PD1), et
* calculer la valeur v2 en utilisant la paire c2.

24. Un système d'évitement des collisions d'aéronefs comprenant

- un premier dispositif de radiocommunication (10) selon l'une des revendications 1 à 19 à un premier aéronef (1) pour émettre sans fil des informations relatives au premier aéronef (1), et
- un deuxième dispositif de radiocommunication (20) selon l'une des revendications 1 à 19 à un deuxième aéronef (2) pour émettre sans fil des informations relatives au deuxième aéronef (2).

Quantization Step

Fig. 1b

Avg. Quantization Error %

Fig. 1c

Fig. 1a

Fig. 2

| 31 | 30 | 29 | 28 | 27 | 26 | 25 | 24 | ... | 7 | 6 | 5 | 4 | 3 | 2 | 1 | 0 |

Fig. 3

a) 

Leading bits truncated at given latitude

b)

Longitudinal grid width at given latitude

c)

Longitudinal resolution at a given latitude

**Fig. 4**

**Fig. 5**

GPS

GPS

GPS

D2(PD2', ID2)

D1(PD1', ID1)

1

P1

10

P2

20

2

D3(PD3', ID3)

P3

30

3

D1, D2, D3

40

**Fig. 6**

```
        31 30 29 28 27 26 25 24 23 22 21 20 19 18  ···  12 11 10  9  8  7  6  5  4  3  2  1  0

a) PD1_LAT  0  1  0  0  0  0  1  0  0  1  0  1  0  1       1  0  1  0  1  0  1  1  0  0  0  1  1
b) +        0  0  0  0  0  0  0  0  0  0  0  0  0  0       0  0  0  0  0  0  1  0  0  0  0  0  0
c) =        0  1  0  0  0  0  1  0  0  1  0  1  0  1       1  0  1  0  1  1  0  0  0  0  1  1
d) c>>6     1  1  1  1  1  1  0  1  0  0  0  0  1  0       1     ···        1  0  1  0  1  1  0
e) & mask   0  0  0  0  0  0  0  0  0  0  0  0  1  1       1  1  1  1  1  1  1  1  1  1  1
f) =        0  0  0  0  0  0  0  0  0  0  0  0  1  0       1     ···        1  0  1  0  1  1  0
g) PD1'_LAT                                1  0       1     ···        1  0  1  0  1  1  0

h) PD2_LAT  0  1  0  0  0  0  1  0  0  1  0  1  0  1       1  0  0  0  1  0  0  1  0  0  0  0  1
i) g<<6                          1  0  0  1  0  1  0  1    1  0  1  0  1  1  0  0  0  0  0  0  0
j) & mask   0  0  0  0  0  0  1  1  1  1  1  1  1  1       1  1  1  1  1  1  1  1  1  1  1  1  1
k) =        0  0  0  0  0  0  1  0  0  1  0  1  0  1       1  0  1  0  1  1  0  0  0  0  0  0  0
l) h & ~j   0  1  0  0  0  0  0  0  0  0  0  0  0  0       0  0  0  0  0  0  0  0  0  0  0  0  0

m) k | l    0  1  0  0  0  0  1  0  0  1  0  1  0  1       1  0  1  0  1  1  0  0  0  0  0  0  0
```

**Fig. 7**

EP 4 275 301 B1

**Fig. 8**

**Fig. 9**

**REFERENCES CITED IN THE DESCRIPTION**

**Patent documents cited in the description**

- US 20210035454 A1

- US 20130036238 A1

**Non-patent literature cited in the description**

- ADS-B based real-time air traffic monitoring system. **VARGA MIHALY et al.** 38th International Conference on Telecommunications and Signal Processing (TSP). IEEE, 09 July 2015, 215-219